(19) Europäisches Patentamt
European Patent Office
Office européen des brevets

(11) **EP 4 723 032 A1**

(12) **EUROPEAN PATENT APPLICATION**
published in accordance with Art. 153(4) EPC

(43) Date of publication:
**08.04.2026 Bulletin 2026/15**

(21) Application number: **23939716.9**

(22) Date of filing: **01.06.2023**

(51) International Patent Classification (IPC):
***G06T 7/00*** (2017.01)

(52) Cooperative Patent Classification (CPC):
**G06T 7/00**

(86) International application number:
**PCT/JP2023/020563**

(87) International publication number:
**WO 2024/247242 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FUJITSU LIMITED
Kawasaki-shi, Kanagawa 211-8588 (JP)**

(72) Inventors:
• **MATSUMOTO, Chikako
Kawasaki-shi, Kanagawa 211-8588 (JP)**
• **ABE, Narishige
Kawasaki-shi, Kanagawa 211-8588 (JP)**

(74) Representative: **Hoffmann Eitle
Patent- und Rechtsanwälte PartmbB
Arabellastraße 30
81925 München (DE)**

(54) **IDENTIFICATION METHOD, IDENTIFICATION PROGRAM, AND INFORMATION PROCESSING DEVICE**

(57) Disclosed is an identification method of causing a computer to execute processing of generating, when a first person is detected from a first image captured by a first camera and a second person is detected from a second image captured by a second camera, relationship information obtained by associating a position in the first image from which the first person is detected with a position in the second image from which the second person is detected, and identifying, based on feature information on the first person and feature information on the second person, the first person and the second person.

FIG.7

EP 4 723 032 A1

**Description**

Technical Field

The present invention relates to an identification method, an identification program, and an information processing apparatus.

Background Art

A tracking technique using a video of a camera in various use scenes such as crime prevention, marketing analysis, and behavior analysis of customers is utilized. As the use scene of the tracking technique is enlarged in this way, the importance of a task of re-identification (Re-ID) for identifying the identity of objects captured by different cameras is increasing.

As one of techniques related to the Re-ID, the following monitoring camera terminal has been proposed (refer to, for example, Patent Literature 1). For example, at the time of installation of the monitoring camera terminal, the position of an object is detected from a frame image captured by each of the plurality of monitoring camera terminals with reference to four markers marked on the floor surface in an overlapping area monitored by the plurality of monitoring camera terminals. Further, the position of the object detected for each frame image of each monitoring camera terminal is converted into the position of a common coordinate system according to a coordinate conversion parameter calculated using the above-described four markers. The objects located in the overlapping area are identified based on a distance between the objects converted into the position of the common coordinate system in this manner.

Citation List

Patent Literature

Patent Document 1: International Publication Pamphlet No. WO 2011/010490

Summary of invention

Technical Problem

However, the related art represented by the above-described monitoring camera terminal has an aspect that it is difficult to identify an object without a marker marked in an overlapping area.

In one aspect, an object of the present invention is to provide an identification method, an identification program, and an information processing apparatus capable of implementing markerless object identification.

Solution to Problem

According to an aspect of the embodiment of the invention, an identification method of causing a computer to execute processing of: generating, when a first person is detected from a first image captured by a first camera and a second person is detected from a second image captured by a second camera, relationship information obtained by associating a position in the first image from which the first person is detected with a position in the second image from which the second person is detected; and identifying, based on feature information on the first person and feature information on the second person, the first person and the second person.

Advantageous Effects of Invention

According to an embodiment, object identification can be implemented in a markerless manner.

Brief Description of Drawings

FIG. 1 is a block diagram illustrating a functional configuration example of an information processing apparatus.
FIG. 2 is a schematic diagram illustrating an example of person re-identification.
FIG. 3 is a diagram illustrating an arrangement example of cameras.
FIG. 4 is a diagram illustrating a detection example of a person.

FIG. 5 is a diagram illustrating a generation example of a positional correspondence relationship between image elements.

FIG. 6 is a diagram illustrating an arrangement example of cameras.

FIG. 7 is a diagram illustrating a generation example of a positional correspondence relationship between image elements.

FIG. 8 is a diagram illustrating an arrangement example of cameras.

FIG. 9 is a schematic diagram illustrating an example of person re-identification.

FIG. 10 is a diagram illustrating a configuration example of correspondence relationship data.

FIG. 11 is a flowchart illustrating a procedure of overall processing of the information processing apparatus.

FIG. 12 is a flowchart illustrating a procedure of second person re-identification processing.

FIG. 13 is a diagram illustrating a detection example of a person.

FIG. 14 is a diagram illustrating a generation example of a positional correspondence relationship between image elements.

FIG. 15 is a diagram illustrating interpolation between blocks.

FIG. 16 is a diagram illustrating a configuration example of correspondence relationship data.

FIG. 17 is a flowchart illustrating a procedure of the second person re-identification processing.

FIG. 18 is a diagram illustrating an example of check-in according to an application example.

FIG. 19 is a flowchart illustrating a procedure of person tracking processing according to the application example.

FIG. 20 is a diagram illustrating a hardware configuration example.

Description of Embodiments

Hereinafter, embodiments of an identification method, an identification program, and an information processing apparatus according to the present application will be described with reference to the accompanying drawings. Each embodiment merely illustrates one example and aspects, and a numerical value, a function range, a usage scene, and the like are not limited by such an example. The respective embodiments can be appropriately combined with each other within a range in which processing contents do not contradict each other.

<First Embodiment>

<Overall Configuration>

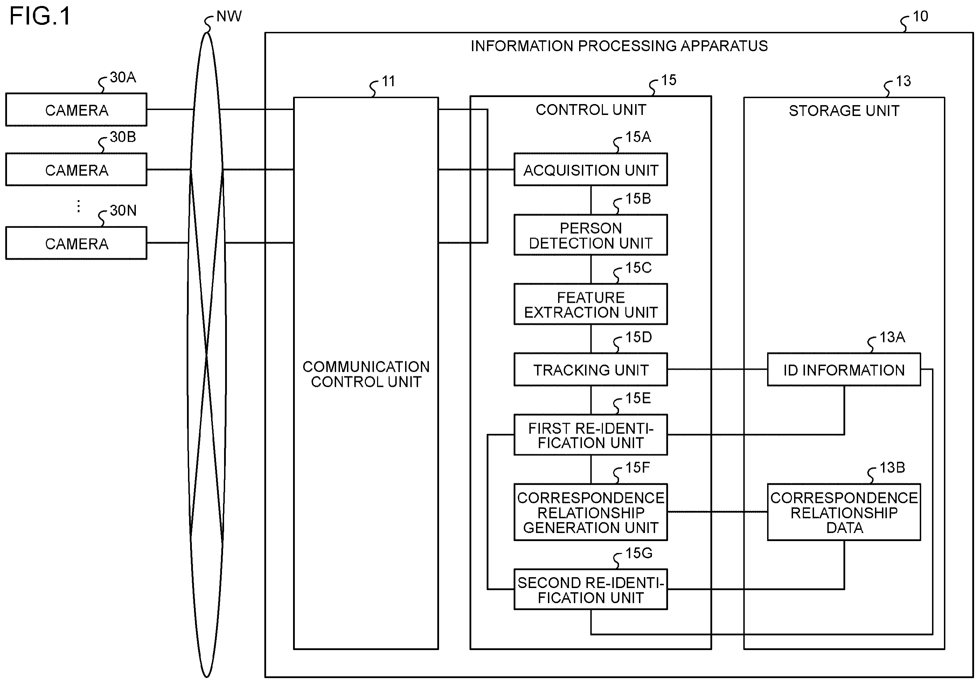

FIG. 1 is a block diagram illustrating a functional configuration example of an information processing apparatus. An information processing apparatus 10 illustrated in FIG. 1 provides a multi-camera tracking function of tracking an object using cameras 30A to 30N.

The information processing apparatus 10 is an example of a computer that provides the multi-camera tracking function. For example, the information processing apparatus 10 may be implemented as a server that provides the above-described multi-camera tracking function on-premises. In addition, the information processing apparatus 10 can also provide the multi-camera tracking function as a cloud service by being implemented as a platform as a service (PaaS) type or a software as a service (SaaS) type application.

As illustrated in FIG. 1, the cameras 30A to 30N are connected to the information processing apparatus 10 via a network NW. For example, the network NW may be implemented by any type of communication network such as the Internet or a local area network (LAN) regardless of whether the network NW is wired or wireless.

The cameras 30A to 30N are each an imaging device that captures an image. Hereinafter, in a case where the individual cameras 30A to 30N don't need to be distinguished from each other, the cameras 30A to 30N are referred to as "cameras 30".

These cameras 30A to 30N may be arranged such that the entire area to be supported for tracking by the multi-camera tracking function is covered by capturing ranges of the cameras 30A to 30N. At this time, the cameras 30 can be installed in an arrangement in which a part of the capturing ranges overlap each other. For example, the capturing range of one camera 30 may overlap the capturing range of one or more other cameras 30.

Furthermore, the operations through which the cameras 30A to 30N capture images may be synchronized among the cameras 30A to 30N. In this manner, the images captured by the cameras 30A to 30N can be transmitted to the information processing apparatus 10 in units of frames.

<Multi-Camera Tracking>

Hereinafter, a "person" will be exemplified as an object to be tracked by the multi-camera tracking function, but the object is not limited thereto, and any object such as a moving object is not hindered. For example, the object may be a living object other than a person, such as a horse or a dog, or may be an inanimate object such as a vehicle such as a two-wheeled vehicle or a four-wheeled vehicle, or a flying object such as a drone.

For example, examples of use cases of the multi-camera tracking function include monitoring, marketing analysis, and behavior analysis of customers targeting a public facility such as a station, a commercial facility such as a shopping mall, or a complex facility.

In such a use case, the person to be tracked can move in the capturing ranges of the plurality of cameras 30A to 30N. In this case, from an aspect of suppressing disconnection of a flow line of a person obtained by tracking, in a case where a person appearing in one camera appears in another camera, viewpoints of the cameras used for tracking can be switched by associating the persons as the same person.

<Person Re-identification>

Therefore, as a part of the multi-camera tracking function, the information processing apparatus 10 executes person re-identification, so-called person re-ID, for identifying the identity of persons captured by the plurality of cameras 30A to 30N.

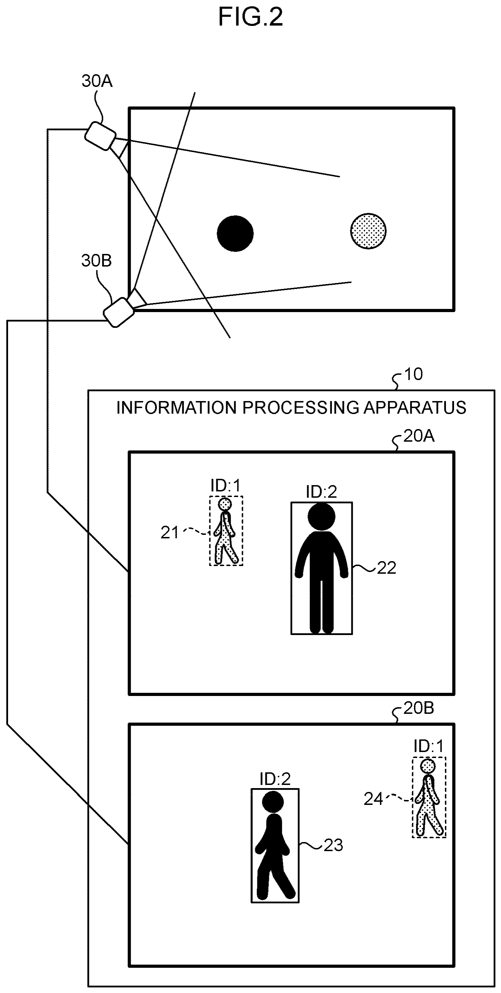

FIG. 2 is a schematic diagram illustrating an example of person re-identification. For convenience of description, FIG. 2 schematically illustrates a top view of a facility to be captured by the camera 30A and the camera 30B, and schematically illustrates angles of view of the camera 30A and the camera 30B in the top view. Furthermore, FIG. 2 illustrates an object detection result for the image 20A captured by the camera 30A, for example, a bounding box of an object whose class is a "Person". Hereinafter, the bounding box may be referred to as a "Bbox". Furthermore, an object detection result for the image 20B captured by the camera 30B, for example, a Bbox of an object whose class is "Person" is illustrated.

As illustrated in FIG. 2, the person re-ID is a task of associating the same persons captured by a plurality of different cameras 30, that is, the camera 30A and the camera 30B, that is, persons indicated by the same hatching.

As an example only, the person re-identification can be implemented by collating pieces of feature information extracted from images corresponding to respective regions of the Bbox. Hereinafter, the image corresponding to the region of the Bbox may be referred to as a "Bbox image". For example, as an example of the feature information, there is a feature amount (feature vector) obtained by embedding the Bbox image in a feature space. The person re-identification can be implemented by evaluating a degree of similarity between such a pair of feature information or a distance.

For example, in the example illustrated in FIG. 2, a Bbox 21 detected from the image 20A and a Bbox 24 detected from the image 20B are identified as those of the same person. In this case, the same ID "1" is allocated to each of the Bbox 21 and the Bbox 24. Further, a Bbox 22 detected from the image 20A and a Bbox 23 detected from the image 20B are identified as those of the same person. In this case, the same ID "2" is allocated to each of the Bbox 22 and the Bbox 23.

<One Aspect of Problem>

However, as described in the background, there is an aspect that it is difficult to identify an object without a marker marked in an overlapping area in the person re-identification represented by a monitoring camera terminal.

<One Aspect of Problem Solving Approach>

Therefore, the information processing apparatus 10 according to the present embodiment generates a correspondence relationship of elements between images of respective cameras based on the detection positions of persons detected from the images of the respective cameras in the background in which pieces of feature information on the persons in the images among the plurality of cameras are collated to execute the person re-identification. It is noted that the "element" referred to herein may be an element of an image, and may be a pixel or a block which is a set of pixels.

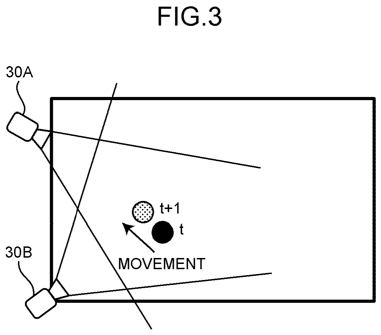

FIG. 3 is a diagram illustrating an arrangement example of the cameras 30. For convenience of description, FIG. 3 schematically illustrates a top view of a facility to be captured by the camera 30A and the camera 30B, and schematically illustrates angles of view of the camera 30A and the camera 30B in the top view.

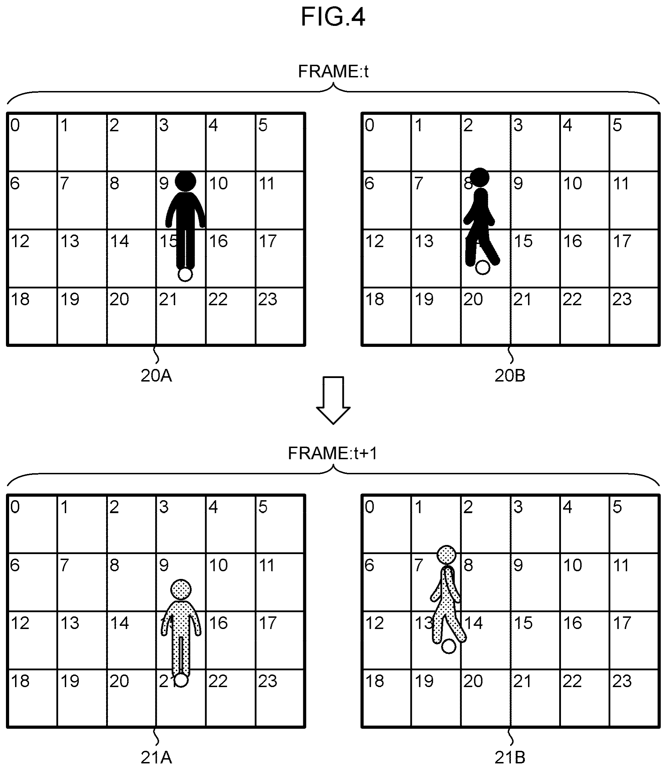

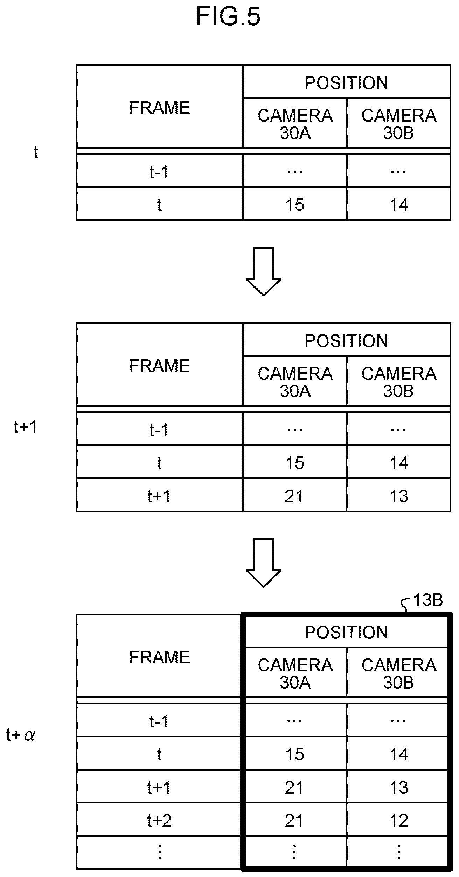

Under such an arrangement of the camera 30, FIG. 3 illustrates an example in which one person moves from the position of a frame t (filled with black) to the position of a frame t+1 (hatching of dots). In this case, in each frame of the frame t and the frame t+1, a detection result of the person illustrated in FIG. 4 is obtained for each of the camera 30A and the camera 30B, and a positional correspondence relationship between image elements illustrated in FIG. 5 is generated.

FIG. 4 is a diagram illustrating a detection example of a person. FIG. 5 is a diagram illustrating a generation example of a positional correspondence relationship between image elements. In FIG. 4, the detection position of the person in each of the frame t and the frame t+1 is illustrated for each of the camera 30A and the camera 30B. Further, in FIG. 4, as the detection position of the person, a middle point of the bottom of four sides included in the Bbox is plotted by a white circle.

As illustrated in FIG. 4, an image captured by the camera 30 is divided into a total of 24 blocks of 4 rows and 6 columns, as an example only. Such a block is used as an element of an image of the camera 30, and a positional correspondence relationship of the elements between the camera 30A and the camera 30B is recorded in units of frames.

For example, in the image 20A captured in the frame t by the camera 30A, the detection position of the person becomes a block with a block number "15", whereas in the image 20B captured in the frame t by the camera 30B, the detection position of the person becomes a block with a block number "14". In this case, as illustrated in FIG. 5, a correspondence relationship between the block number "15", which is an element of the image 20A of the camera 30A, and the block number "14", which is an element of the image 20B of the camera 30B, is recorded.

Furthermore, in an image 21A captured in the frame t+1 by the camera 30A, the detection position of the person becomes a block with a block number "21", whereas in an image 21B captured in the frame t+1 by the camera 30B, the detection position of the person becomes a block with a block number "13". In this case, as illustrated in FIG. 5, a correspondence relationship between the block number "21", which is an element of the image 21A of the camera 30A, and the block number "13", which is an element of the image 21B of the camera 30B, is recorded.

As described above, in the example illustrated in FIG. 4, the detection positions of the persons in the frame t and the frame t+1 have been exemplified as an example only, but it is obvious that the positional correspondence relationship of more elements can be accumulated by overlapping the further lapse of time after the frame t+2.

Further, in the example illustrated in FIG. 3, the two cameras 30, that is, the camera 30A and the camera 30B, are illustrated, but the number of cameras 30 is not limited to two, and the number of cameras 30 may be three or more.

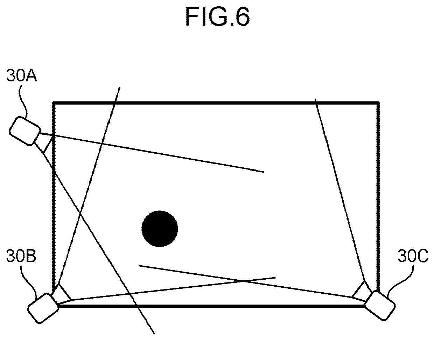

FIG. 6 is a diagram illustrating an arrangement example of the cameras 30. For convenience of description, FIG. 6 schematically illustrates a top view of a facility to be captured by three cameras 30 including the cameras 30A to 30C and schematically illustrates angles of view of the cameras 30A to 30C in the top view.

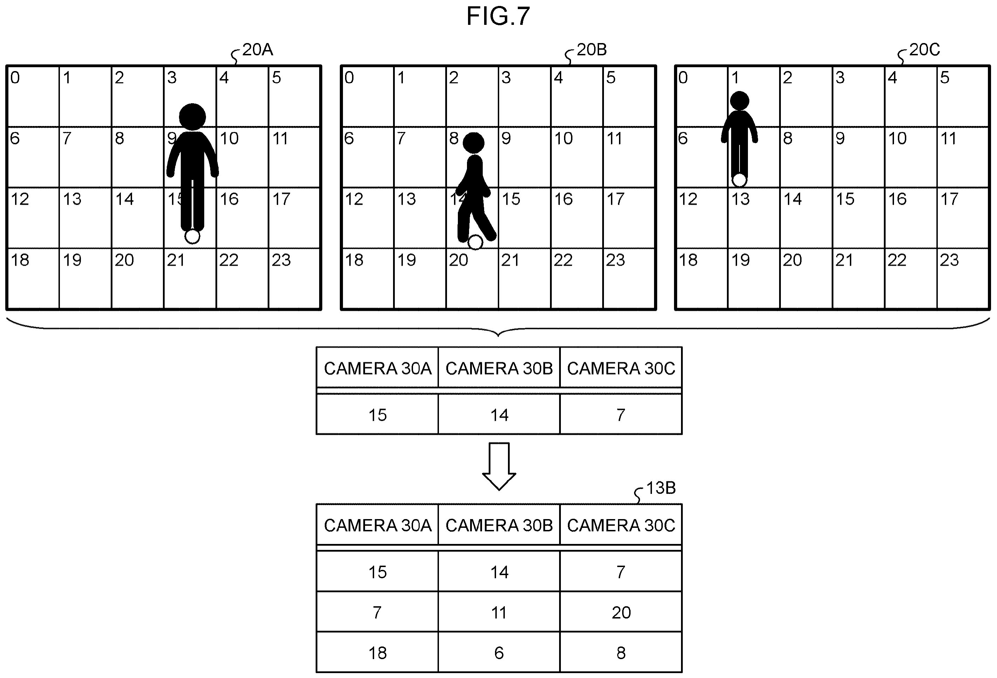

FIG. 7 is a diagram illustrating a generation example of a correspondence relationship between images of a plurality of cameras. In FIG. 7, the detection position of the person in the frame t is illustrated for each of the cameras 30A to 30C. Further, in FIG. 7, as the detection position of the person, a middle point of the bottom of four sides included in the Bbox is plotted by a white circle.

As illustrated in FIG. 7, each of the images captured by the cameras 30 is divided into a total of 24 blocks of 4 rows and 6 columns, as an example only. Such blocks are used as elements of images of the cameras 30, and a positional correspondence relationship of the elements is recorded in units of frames among the cameras 30A to 30C.

For example, in the image 20A captured in the frame t by the camera 30A, the detection position of the person becomes a block with the block number "15". In addition, in the image 20B captured in the frame t by the camera 30B, the detection position of the person becomes a block with the block number "14". Furthermore, in the image 20C captured in the frame t by the camera 30C, the detection position of the person becomes a block with a block number "7".

In this case, a correspondence relationship among the block number "15", which is an element of the image 20A of the camera 30A, the block number "14", which is an element of the image 20B of the camera 30B, and the block number "7", which is an element of the image 20C of the camera 30C, is recorded.

It is noted that, although the detection positions of the persons in the frame t are illustrated in FIG. 6, it is possible to accumulate positional correspondence relationship data 13B of more elements by overlapping the further lapse of time after the frame t+1.

In this manner, it is possible to generate the positional correspondence relationship of the elements between the images of the respective cameras 30 on the background of the person re-identification in which pieces of feature information on the persons in the images among the plurality of cameras are collated. According to such a correspondence relationship, it is possible to implement the person re-identification independently of the person re-identification by matching of the feature information and with a different logic.

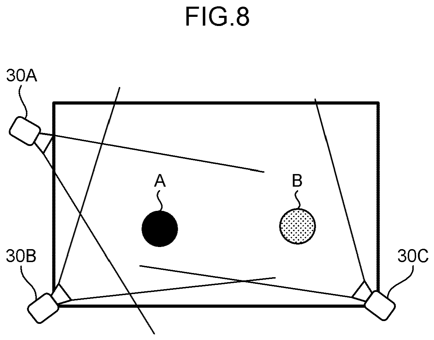

FIG. 8 is a diagram illustrating an arrangement example of the cameras 30. For convenience of description, FIG. 8 schematically illustrates a top view of a facility to be captured by three cameras 30 including the cameras 30A to 30C and schematically illustrates angles of view of the cameras 30A to 30C in the top view.

Under such an arrangement of the cameras 30, FIG. 8 illustrates an example in which two persons A and B are present in the capturing range of three cameras 30A to 30C. In this case, the person re-identification can be executed by collating a combination of the detection positions of the persons, obtained from the respective images 20A to 20C captured by three cameras 30A to 30C, with the correspondence relationship data 13B illustrated in FIG. 7.

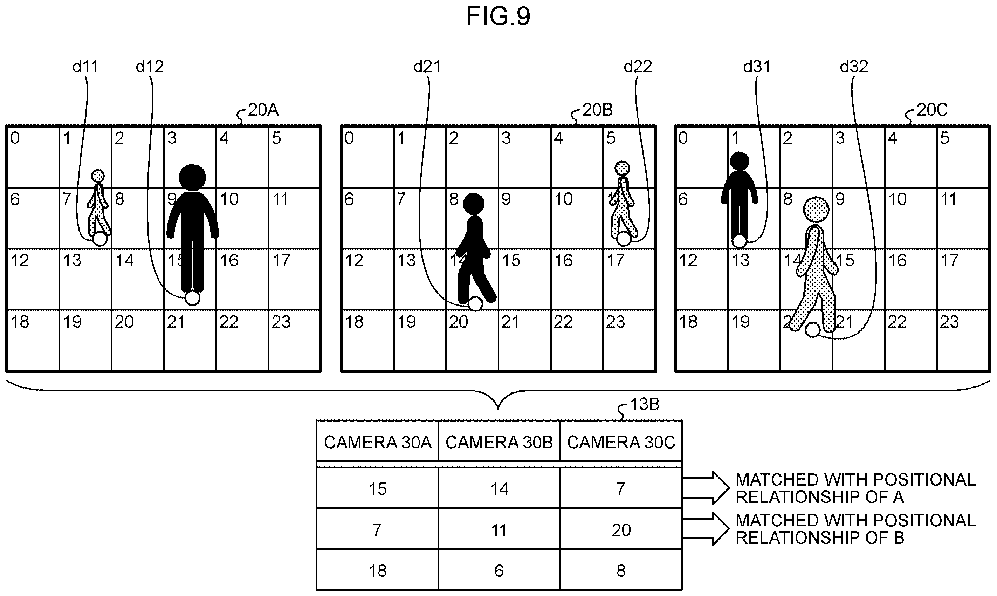

FIG. 9 is a schematic diagram illustrating an example of the person re-identification. FIG. 9 illustrates the images 20A to 20C captured by the respective cameras 30A to 30C, and a detection result of a person. Furthermore, in FIG. 9, as the detection position of the person, a middle point of the bottom of four sides included in the Bbox of an object whose class is "Person" is plotted by a white circle.

As illustrated in FIG. 9, in the image 20A captured by the camera 30A, a block number "7" is detected as a detection position d11 of the person, and a block number "15" is detected as a detection position d12 of the person. Furthermore, in the image 20B captured by the camera 30B, a block number "11" is detected as a detection position d21 of the person, and a block number "14" is obtained as a detection position d22 of the person. Furthermore, in the image 20C captured by the camera 30C, a block number "7" is detected as a detection position d31 of the person, and a block number "20" is detected as a detection position d32 of the person.

In this case, a combination of the detection position d12 of the person of the camera 30A, the detection position d21 of the person of the camera 30B, and the detection position d31 of the person of the camera 30C matches a data entry of a first row of the correspondence relationship data 13B. Therefore, a person A appearing in the block number "15" of the camera 30A, the block number "14" of the camera 30B, and the block number "7" of the camera 30C can be identified as the same person.

Further, a combination of the detection position d11 of the person of the camera 30A, the detection position d22 of the person of the camera 30B, and the detection position d32 of the person of the camera 30C matches a data entry of a second row of the correspondence relationship data 13B. Therefore, a person B appearing in the block number "7" of the camera 30A, the block number "11" of the camera 30B, and the block number "20" of the camera 30C can be identified as the same person.

As described above, the information processing apparatus 10 according to the present embodiment generates a positional correspondence relationship of elements between images of the respective cameras 30 using an object to be tracked as a clue without using a marker such as a tape that needs to be installed in advance.

Therefore, according to the information processing apparatus 10 of the present embodiment, it is possible to implement the person re-identification without a marker. Therefore, it is possible to reduce the trouble of installing a marker such as a tape in advance in a space to be captured. Furthermore, in a case where the person re-identification is executed using the positional correspondence relationship of the elements between the images of the respective cameras 30, coordinate conversion to a common coordinate system does not need to be executed as in the case of the person re-identification executed in the monitoring camera terminal, and thus, it is possible to reduce the processing load for the coordinate conversion. In addition, although an error of the coordinate conversion increases as the position of the person, who is a subject, is separated from four markers, in the person re-identification executed by the monitoring camera terminal, the occurrence of such an error and the increase of the error can also be suppressed.

Furthermore, according to the information processing apparatus 10 of the present embodiment, robust person re-identification can be implemented as compared with person re-identification by collation of pieces of feature information. That is, in a case where the person re-identification is executed by the collation of pieces of feature information, deterioration in accuracy of the person re-identification increases as a change in a viewpoint and a change in an illumination condition between the cameras 30 increase, and thus deterioration in accuracy of the person re-identification also increases as resolution of the cameras 30 decreases. On the other hand, in a case where the person re-identification is executed using the positional correspondence relationship of the elements between the images of the respective cameras 30 as in the information processing apparatus 10 according to the present embodiment, since the person re-identification is hardly affected by the change in the viewpoint, the change in the illumination condition, the resolution of the camera, and the like, it is possible to suppress deterioration in accuracy of the person re-identification.

<Configuration of Information Processing Apparatus 10>

FIG. 1 schematically illustrates a block related to the multi-camera tracking function included in the information processing apparatus 10. As illustrated in FIG. 1, the information processing apparatus 10 includes a communication control unit 11, a storage unit 13, and a control unit 15. It is noted that FIG. 1 merely illustrates excerpted functional units related to the multi-camera tracking function described above, and functional units other than those illustrated may be included in the information processing apparatus 10.

The communication control unit 11 is a functional unit that controls communication with other devices such as the cameras 30A to 30N. As an example only, the communication control unit 11 may be implemented by a network interface card such as a LAN card. As one aspect, the communication control unit 11 can receive an image from the camera 30 in units of frames or can receive a moving image for a certain period of time. As another aspect, the communication control unit 11 can also output a result of multi-camera tracking to any external device.

The storage unit 13 is a functional unit that stores various types of data. As an example only, the storage unit 13 is implemented by an internal, external, or auxiliary storage of the information processing apparatus 10. For example, the storage unit 13 stores ID information 13A and correspondence relationship data 13B. It is noted that the ID information 13A and the correspondence relationship data 13B will be described together with a scene in which reference, generation, or registration of the ID information 13A and the correspondence relationship data 13B is executed.

The control unit 15 is a functional unit that performs overall control of the information processing apparatus 10. For example, the control unit 15 can be implemented by a hardware processor. The control unit 15 may also be implemented by hard-wired logic. As illustrated in FIG. 1, the control unit 15 includes an acquisition unit 15A, a person detection unit 15B, a feature extraction unit 15C, a tracking unit 15D, a first re-identification unit 15E, a correspondence relationship generation unit 15F, and a second re-identification unit 15G.

The acquisition unit 15A is a processing unit that acquires an image. As an example only, the acquisition unit 15A can acquire images captured by the cameras 30 via the network NW. At this time, the acquisition unit 15A can either acquire each frame's image in real time or can acquire a moving image including an image for any period.

The person detection unit 15B is a processing unit that detects a person from the image for each image captured by the camera 30. As an example only, the person detection unit 15B can be implemented by a machine training model that outputs a Bbox of an object using an image as an input. Such a machine training model may be implemented by a model in which a transformer is combined with a convolutional neural network (CNN), in addition to a you only look once (YOLO) and a single shot multiBox detector (SSD).

The feature extraction unit 15C is a processing unit that extracts a feature amount of the person for each person detected from each of the images captured by the cameras 30. As an example only, the feature extraction unit 15C can be implemented by a machine training model that outputs a feature amount (feature vector) representing an appearance feature, that is, a so-called appearance feature, with an image, that is, a Bbox image, as an input. Such a machine training model may be implemented by CNN or the like that embeds an input image in a feature space.

The tracking unit 15D is a processing unit that tracks a person detected from an image captured by the camera 30. As an example only, the tracking unit 15D can be implemented by a machine training model for associating objects between frames, for example, simple online and real time tracking (SORT), deep SORT, or the like, including multiple-object tracking (MOT).

More specifically, the tracking unit 15D can execute the following processing in parallel for each camera 30. For example, the tracking unit 15D allocates a person ID stored in the ID information 13A to a person Bbox detected in a frame in which an image is acquired by the acquisition unit 15A. Here, the ID information 13A may be data in which the person Bbox detected from the image of the frame and the person ID are associated with each other for each frame. At this time, the tracking unit 15D calculates a degree of similarity and a distance between the feature vector of the person Bbox extracted by the feature extraction unit 15C and the feature vector of the person Bbox detected in the previous frame. Then, a person ID associated with a person Bbox having the maximum degree of similarity or the minimum distance among the persons detected in the previous frame is allocated to the person Bbox extracted by the feature extraction unit 15C. At this time, in a case where the maximum degree of similarity is equal to or less than a threshold value, or the minimum distance is equal to or larger than a threshold value, a new person ID can be numbered and allocated to the person Bbox extracted by the feature extraction unit 15C. Thereafter, an allocation result of the person ID with respect to the person Bbox by the tracking unit 15D is registered as an allocation result of the person ID of the current frame of the ID information 13A.

It is noted that, here, only the previous frame is set as a calculation target, but any number of past frames may be set as a calculation target of a degree of similarity and a distance. In addition, here, a description has been given as to an example in which tracking is performed by evaluating a degree of similarity of appearance features and a distance, but tracking may be performed based on a degree of overlap between Bboxes between frames.

The first re-identification unit 15E is a processing unit that executes person re-identification, so-called person re-ID, by collating the feature vectors of the persons in the images among the plurality of cameras 30A to 30N.

More specifically, the first re-identification unit 15E collates the feature vector of the Bbox image detected from the image of one camera 30 with the feature vector of the Bbox image detected from the image of the other camera 30 for each pair of two cameras 30. For example, the first re-identification unit 15E allocates the same person ID to a pair of Bboxes having the maximum degree of similarity between the feature vectors or a pair of Bboxes having the minimum distance between the feature vectors. Here, as an example only, it is assumed that a previously allocated person ID, that is, an old person ID among the pair of person IDs allocated by the tracking unit 15D is commonly allocated. At this time, in a case where the maximum degree of similarity is equal to or less than the threshold value or the minimum distance is equal to or larger than the threshold value, the same person ID is not allocated, and each of the pair of person IDs allocated by the tracking unit 15D can be maintained. Thereafter, the allocation result of the person ID with respect to the person Bbox by the first re-identification unit 15E is updated as the allocation result of the person ID of the current frame of the ID information 13A.

The correspondence relationship generation unit 15F is a processing unit that generates a positional correspondence relationship of elements between images of the respective cameras 30. As an example only, the correspondence relationship generation unit 15F starts processing in a case where the correspondence relationship data 13B is incomplete. The term "incomplete" as used herein refers to a state in which a positional correspondence relationship is not accumulated in the correspondence relationship data 13B to such an extent that the correspondence relationship data can be used for the person re-identification by the second re-identification unit 15G. Completion or incompletion of such correspondence relationship data 13B can be determined based on the following criteria.

As one aspect, the correspondence relationship generation unit 15F can determine that the correspondence relationship data 13B is incomplete in a case where an elapsed time from the start time at which the generation of the correspondence relationship data 13B is started is less than a threshold value, and can determine that the correspondence relationship data 13B is completed in a case where the elapsed time is equal to or longer than the threshold value.

As another aspect, the correspondence relationship generation unit 15F can determine that the correspondence relationship data 13B is incomplete in a case where the total number of data entries registered in the correspondence relationship data 13B is less than a threshold value, and can determine that the correspondence relationship data 13B is completed in a case where the total number of data entries is equal to or greater than the threshold value.

As a further aspect, the correspondence relationship generation unit 15F calculates a coverage rate of a block from the data entry registered in the correspondence relationship data 13B. The term "coverage rate" as used herein refers to a rate of blocks in which positional correspondence relationships are covered among all blocks, and for example, refers to a value obtained by dividing the number of types of blocks in which positional correspondence relationships are registered in the correspondence relationship data 13B by the total number of blocks included in an image. In a case where such a block coverage rate is less than a threshold value, the correspondence relationship data 13B can be determined to be incomplete, and in a case where the block coverage rate is equal to or greater than the threshold value, the correspondence relationship data 13B can be determined to be completed.

Then, in a case where the correspondence relationship data 13B is incomplete, the correspondence relationship generation unit 15F determines whether the number of people existing in a space to be captured is less than a threshold value, for example, "2". Such number-of-people determination can be implemented by determining whether the number of people detected from each of all the images captured by the cameras 30A to 30N, that is, an object whose class name is "Person", is less than a threshold value, for example, "2".

It is noted that the above-described number-of-people determination is not limited to being implemented by image processing, and may be implemented by any other means. For example, a user input at a time point or a period when the number of persons is less than a threshold value, for example, designation of a frame number, or the like can be received via a user interface (not illustrated). In addition, it is possible to determine whether the number of people existing in the space to be captured is less than the threshold value based on the number of terminals from which a beacon receiver arranged in the space to be captured receives a beacon from a user terminal.

Here, in a case where the number of people existing in the space to be captured is less than the threshold value, the correspondence relationship generation unit 15F executes the following processing. That is, the correspondence relationship generation unit 15F adds, to the correspondence relationship data 13B, a data entry including a combination of block numbers corresponding to the detection positions of persons detected for the respective cameras 30 by the person detection unit 15B in frames in which the images of the respective cameras 30 are acquired by the acquisition unit 15A. It is noted that the generation of the positional correspondence relationship can be executed as described above with reference to FIGS. 3 to 7.

An example of storing such correspondence relationship data 13B will be described. For example, the correspondence relationship data 13B may be stored in a list format. In this case, as described with reference to FIGS. 5, 7, and 9, in the correspondence relationship data 13B, a combination of the block numbers corresponding to the detection positions of the persons in the images of the respective cameras 30 is stored as the data entry.

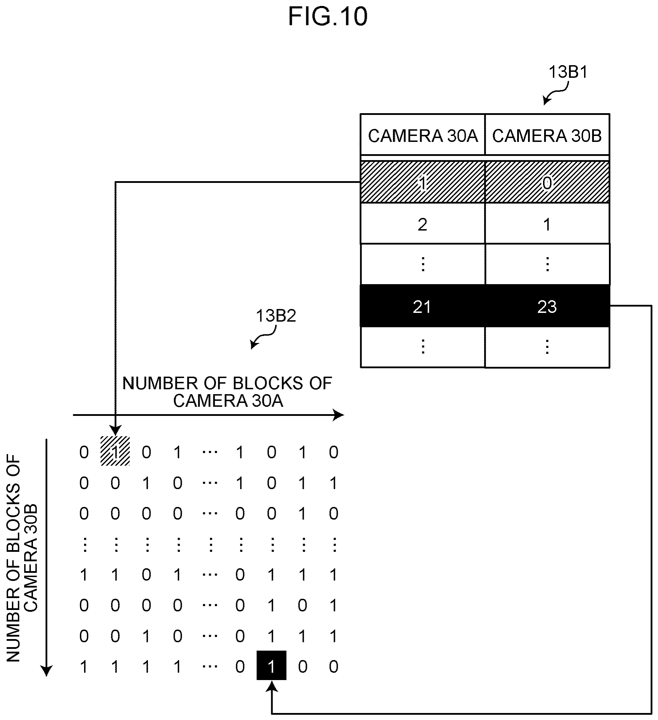

In addition, the correspondence relationship data 13B may be stored in a matrix format. FIG. 10 is a diagram illustrating a configuration example of the correspondence relationship data 13B. FIG. 10 illustrates correspondence relationship data 13B1 in which a positional correspondence relationship of elements between images of two cameras 30 including the camera 30A and the camera 30B is stored in a list format.

As illustrated in FIG. 10, the correspondence relationship data 13B1 in the list format can be converted into correspondence relationship data 13B2 in the matrix format. A column in the correspondence relationship data 13B2 in the matrix format indicates the block number of the camera 30A, and a row in the correspondence relationship data 13B2 indicates the block number of the camera 30B. In each element of the correspondence relationship data 13B2 in the matrix format, binary values in which the presence or absence of a correspondence relationship is "0" or "1" are stored. For example, in a case where there is a correspondence relationship, a value of "1" is stored, and in a case where there is no correspondence relationship, a value of "0" is stored.

For example, a data entry in the first row of the correspondence relationship data 13B1 in the list format, that is, a diagonally hatched data entry means that there is a correspondence relationship between the block number "1" of the camera 30A and the block number "0" of the camera 30B. The recording of the correspondence relationship equivalent thereto is implemented by storing "1" in the element of the first row and the second column of the correspondence relationship data 13B2 in the matrix format.

In addition, a data entry in the fourth row of the correspondence relationship data 13B1 in the list format, that is, a data entry of the black-and-white inverted display means that there is a correspondence relationship between a block number "21" of the camera 30A and a block number "23" of the camera 30B. The recording of the correspondence relationship equivalent thereto is implemented by storing "1" in the element of the 23rd row and the 21st column of the correspondence relationship data 13B2 in the matrix format.

It is noted that, in FIG. 10, two cameras 30, that is, the camera 30A and the camera 30B are illustrated, but a positional correspondence relationship of three or more cameras 30 can be similarly stored. That is, regardless of the number of cameras 30, the positional correspondence relationship may be stored for each pair. For example, in a case where the number of cameras 30 is N, N×(N-1) pieces of correspondence relationship data 13B2 in the matrix format illustrated in FIG. 10 may be generated.

Referring back to the description of FIG. 1, the second re-identification unit 15G is a processing unit that performs the person re-identification by collating a combination of the detection positions of the persons in the images of the respective cameras 30 with a combination of the image elements among the plurality of cameras registered in the correspondence relationship data 13B.

As an example only, the second re-identification unit 15G can be activated at all times for each frame, or the second re-identification unit can be activated in a case where a specific condition is satisfied, for example, in a case where a person is detected in an image of any one camera 30 of the cameras 30A to 30N. As described above, a mode of continuous activation or conditional activation can be selected according to performance of a processor or a memory mounted in the information processing apparatus 10 or a use scene such as a time zone, as an example only.

After the activation of the second re-identification unit 15G, the second re-identification unit 15G executes the following processing by the total number K of pairs combining pairs of the two cameras 30 from N cameras 30 including the cameras 30A to 30N. Hereinafter, one camera 30 included in the k-th pair is identified as a camera i, and the other camera 30 is identified as a camera J.

For example, the second re-identification unit 15G searches the correspondence relationship data 13B for a combination of the detection positions of Bboxes for each combination of the number L of Bboxes detected from the image of the camera i of the k-th pair and the number M of Bboxes detected from the image of the camera j of the k-th pair.

More specifically, the second re-identification unit 15G searches the correspondence relationship data 13B for a combination of a block number kil corresponding to the detection position of the l-th Bbox of the camera i and a block number kjm corresponding to the detection position of the m-th Bbox of the camera j.

At this time, when the combination of the block number kil and the block number kjm is hit, the person in the l-th Bbox of the camera i and the person in the m-th Bbox of the camera j can be identified as the same person.

In this case, the second re-identification unit 15G determines whether a person re-identification result by the second re-identification unit 15G and a person re-identification result by the first re-identification unit 15E do not match each other. Hereinafter, the person re-identification result by the first re-identification unit 15E may be referred to as a "first person re-identification result", and the person re-identification result by the second re-identification unit 15G may be referred to as a "second person re-identification result".

For example, in a case where different person IDs are allocated to the l-th Bbox of the camera i and the m-th Bbox of the camera j by the first re-identification unit 15E, it is determined that the first person re-identification result and the second person re-identification result do not match each other.

In this case, the second re-identification unit 15G allocates the same person ID to the l-th Bbox of the camera i and the m-th Bbox of the camera j. For example, in a case where the same person ID is allocated to a pair of Bboxes including either the l-th Bbox of the camera i or the m-th Bbox of the camera j in a pair of other cameras 30, the second re-identification unit 15G preferentially allocates the person ID. In addition, the second re-identification unit 15G preferentially allocates a person ID allocated earlier among the person IDs allocated by the tracking unit 15, that is, an old person ID or a person ID having a large number of frames continuously tracked. As a result, the allocation result of the person ID with respect to the person Bbox by the second re-identification unit 15G is updated as the allocation result of the person ID of the current frame of the ID information 13A.

On the other hand, when the combination of the block number kil and the block number kjm is not hit, the person in the l-th Bbox of the camera i and the person in the m-th Bbox of the camera j can be identified that they are not the same person.

In this case, the second re-identification unit 15G determines whether a person re-identification result by the second re-identification unit 15G and a person re-identification result by the first re-identification unit 15E do not match each other.

For example, in a case where the same person ID is allocated to the l-th Bbox of the camera i and the m-th Bbox of the camera j by the first re-identification unit 15E, it is determined that the first person re-identification result and the second person re-identification result do not match each other.

In this case, the second re-identification unit 15G allocates different person IDs to the l-th Bbox of the camera i and the m-th Bbox of the camera j. For example, the second re-identification unit 15G returns to the person ID allocated to each of the l-th Bbox of the camera i and the m-th Bbox of the camera j by the tracking unit 15D before the same person ID is allocated by the first re-identification unit 15E. As a result, the allocation result of the person ID with respect to the person Bbox by the second re-identification unit 15G is updated as the allocation result of the person ID of the current frame of the ID information 13A.

The ID information 13A obtained in this manner can be output to software that executes processing such as monitoring, marketing analysis, and customer behavior analysis, or a back-end that provides a service, as an example only.

<Flow of Processing>

Next, a flow of processing of the information processing apparatus 10 according to the present embodiment will be described. Here, (2) second person re-identification processing will be described after (1) overall processing executed by the information processing apparatus 10 is described.

(1) Overall Processing

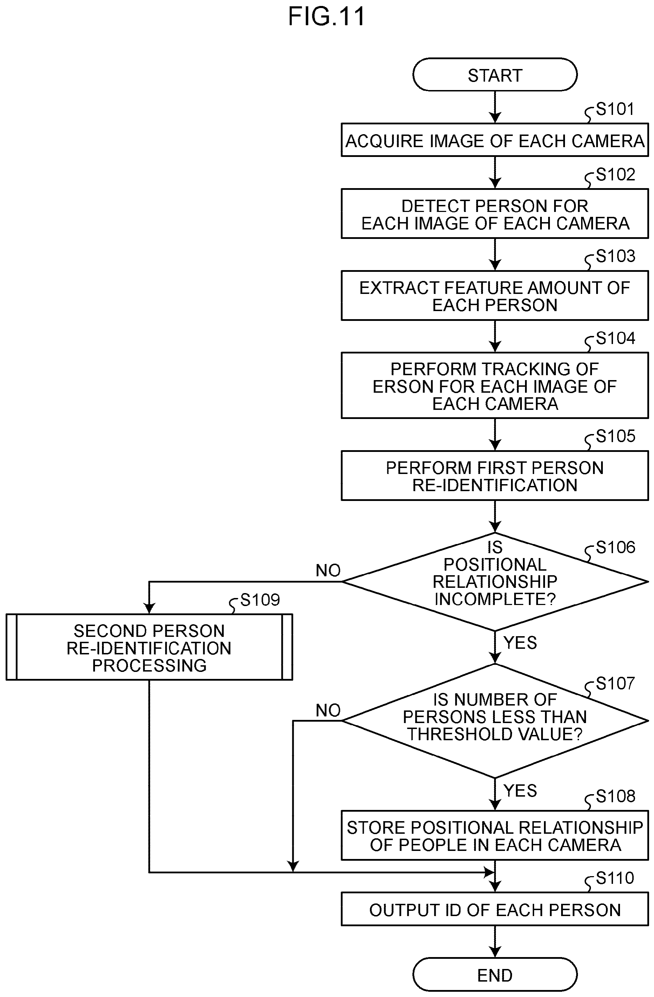

FIG. 11 is a flowchart illustrating a procedure of overall processing of the information processing apparatus 10. The processing illustrated in FIG. 11 can be executed in units of frames, as an example only. As illustrated in FIG. 11, the acquisition unit 15A acquires an image captured by each camera 30 via the network NW (step S101).

Subsequently, the person detection unit 15B detects a person from the image for each image captured by each camera 30 (step S102). Then, the feature extraction unit 15C extracts a feature amount of the person for each person detected from the image captured by the camera 30 (step S103).

Thereafter, the tracking unit 15D tracks the person detected from the image captured by the camera 30 between frames, thereby allocating the person ID stored in the ID information 13A to each person detected from the image captured by the camera 30 (step S104).

Subsequently, the first re-identification unit 15E collates the feature amounts of the persons in the images among the plurality of cameras 30A to 30N, thereby executing the person re-identification and allocating the same person ID to the same person (step S105).

Then, in a case where the correspondence relationship data 13B is incomplete (Yes in step S106), the correspondence relationship generation unit 15F determines whether the number of people existing in the space to be captured is less than a threshold value, for example, "2" (step S107).

At this time, in a case where the number of people existing in the space to be captured is less than the threshold value (Yes in step S107), the correspondence relationship generation unit 15F executes the following processing. That is, the correspondence relationship generation unit 15F adds, to the correspondence relationship data 13B, a data entry including a combination of block numbers corresponding to the detection positions of persons detected by the respective cameras 30 in the current frame (step S108).

On the other hand, when the correspondence relationship data 13B is completed (No in step S106), the second re-identification unit 15G executes the following processing. That is, the second re-identification unit 15G performs the person re-identification by collating the combination of the detection positions of the persons in the images of the respective cameras 30 with the combination of the image elements among the plurality of cameras registered in the correspondence relationship data 13B (step S109).

Thereafter, after the allocation result of the person ID allocated for each person by the tracking unit 15D, the first re-identification unit 15E, and the second re-identification unit 15G is output to any output destination (step S110), the processing is terminated.

(2) Second Person Re-identification Processing

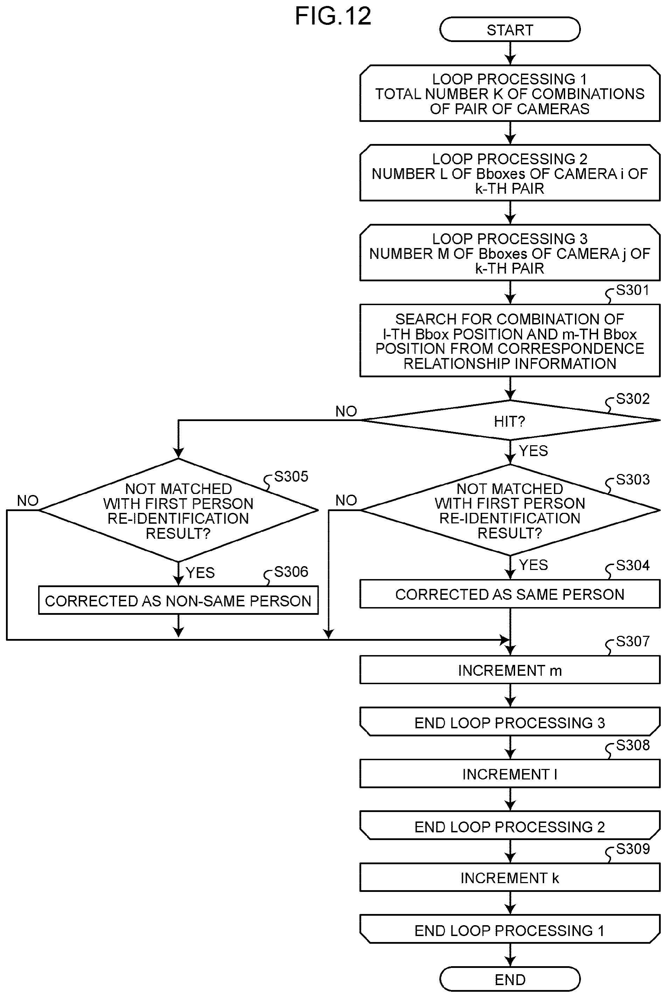

FIG. 12 is a flowchart illustrating a procedure of the second person re-identification processing. The processing illustrated in FIG. 12 corresponds to the processing in step S109 illustrated in FIG. 11. As illustrated in FIG. 12, the second re-identification unit 15G executes loop processing 1 of repeating the processing from step S301 to step S309 by the total number K of combinations of pairs combining pairs of two cameras 30 from N cameras 30 including the cameras 30A to 30N. It is noted that, although FIG. 12 illustrates an example in which the processing from step S301 to step S309 is repeated, this processing can be executed in parallel.

Furthermore, the second re-identification unit 15G executes loop processing 2 of repeating the processing from step S301 to step S308 by the number L of Bboxes detected from the image of the camera i of the k-th pair. It is noted that, although FIG. 12 illustrates an example in which the processing from step S301 to step S308 is repeated, this processing can be executed in parallel.

Furthermore, the second re-identification unit 15G executes the loop processing 2 of repeating the processing from step S301 to step S307 by the number M of Bboxes detected from the image of the camera j of the k-th pair. It is noted that, although FIG. 12 illustrates an example in which the processing from step S301 to step S307 is repeated, this processing can be executed in parallel.

That is, the second re-identification unit 15G searches the correspondence relationship data 13B for a combination of a block number $kil$ corresponding to the detection position of the l-th Bbox of the camera i and a block number $kjm$ corresponding to the detection position of the m-th Bbox of the camera j (step S301).

At this time, when the combination of the block number $kil$ and the block number $kjm$ is hit (Yes in step S302), the person in the l-th Bbox of the camera i and the person in the m-th Bbox of the camera j can be identified as the same person.

In this case, the second re-identification unit 15G determines whether a second person re-identification result obtained by a branch of Yes in step S302 does not match a first person re-identification result obtained in step S105 (step S303).

Then, when the first person re-identification result and the second person re-identification result do not match each other (Yes in step S303), the second re-identification unit 15G allocates the same person ID to the l-th Bbox of the camera i and the m-th Bbox of the camera j (step S304). It is noted that, when the first person re-identification result matches the second person re-identification result (No in step S303), the processing in step S304 is skipped.

On the other hand, when the combination of the block number kil and the block number kjm is not hit (No in step S302), the person in the l-th Bbox of the camera i and the person in the m-th Bbox of the camera j can be identified that they are not the same person.

In this case, the second re-identification unit 15G determines whether the second person re-identification result obtained by a branch of NO in step S302 does not match the first person re-identification result obtained in step S105 (step S305).

Then, when the first person re-identification result and the second person re-identification result do not match each other (Yes in step S305), the second re-identification unit 15G allocates different person IDs to the l-th Bbox of the camera i and the m-th Bbox of the camera j (step S306).

Thereafter, a loop counter m that counts M Bboxes detected from the image of the camera j of the k-th pair is incremented, and the loop processing 3 is repeated until the loop counter m exceeds M.

By repeating such loop processing 3, M Bboxes detected from the image of the camera j of the k-th pair are collated for each l-th Bbox among the L Bboxes detected from the image of the camera i of the k-th pair.

Thereafter, a loop counter l that counts L Bboxes detected from the image of the camera i of the k-th pair is incremented, and the loop processing 2 is repeated until the loop counter l exceeds L.

By repeating the loop processing 2, all combinations of the L Bboxes detected from the image of the camera i of the k-th pair and the M Bboxes detected from the image of the camera j of the k-th pair are collated.

Thereafter, a loop counter k that counts the total number of combinations of pairs combining pairs of two cameras 30 from N cameras 30 including the cameras 30A to 30N is incremented, and the loop processing 1 is repeated until the loop counter k exceeds K.

By repeating the loop processing 1, the second person re-identification processing is terminated for all combinations of pairs of combining pairs of two cameras 30 from N cameras 30 including the cameras 30A to 30N.

<One Aspect of Effect>

As described above, the information processing apparatus 10 according to the present embodiment generates a correspondence relationship of elements between images of respective cameras based on the detection positions of persons detected from the images of the respective cameras in the background in which pieces of feature information on the persons in the images among the plurality of cameras are collated to execute the person re-identification.

Therefore, the information processing apparatus 10 according to the present embodiment can generate the positional correspondence relationship of elements between the images of the respective cameras 30 using an object to be tracked as a clue without using a marker such as a tape that needs to be installed in advance.

Therefore, according to the information processing apparatus 10 of the present embodiment, it is possible to implement the person re-identification without a marker. Therefore, it is possible to reduce the trouble of installing a marker such as a tape in advance in a space to be captured. Furthermore, in a case where the person re-identification is executed using the positional correspondence relationship of the elements between the images of the respective cameras 30, coordinate conversion to a common coordinate system does not need to be executed as in the case of the person re-identification executed in the monitoring camera terminal, and thus, it is possible to reduce the processing load for the coordinate conversion. In addition, although an error of the coordinate conversion increases as the position of the person, who is a subject, is separated from four markers, in the person re-identification executed by the monitoring camera terminal, the occurrence of such an error and the increase of the error can also be suppressed.

Furthermore, according to the information processing apparatus 10 of the present embodiment, robust person re-identification can be implemented as compared with person re-identification by collation of pieces of feature information. That is, in a case where the person re-identification is executed by the collation of pieces of feature information, deterioration in accuracy of the person re-identification increases as a change in a viewpoint and a change in an illumination condition between the cameras 30 increase, and thus deterioration in accuracy of the person re-identification also increases as resolution of the cameras 30 decreases. On the other hand, in a case where the person re-identification is executed using the positional correspondence relationship of the elements between the images of the respective cameras 30 as in the information processing apparatus 10 according to the present embodiment, since the person re-identification is hardly affected by the change in the viewpoint, the change in the illumination condition, the resolution of the camera, and the like, it is possible to suppress deterioration in accuracy of the person re-identification.

<Second Embodiment>

Although the embodiment related to the disclosed apparatus has been described so far, the present invention may be implemented in various different forms other than the above-described embodiment. Therefore, other embodiments included in the present invention will be described below.

<Direction of Person>

In the above-described first embodiment, an example in which the positional correspondence relationship of the blocks among the plurality of cameras is registered in the correspondence relationship data 13B has been described, but other data may be further registered therein. As an example only, the direction of the person, for example, the movement direction of the person can be further registered for the respective cameras 30 in the correspondence relationship data 13B.

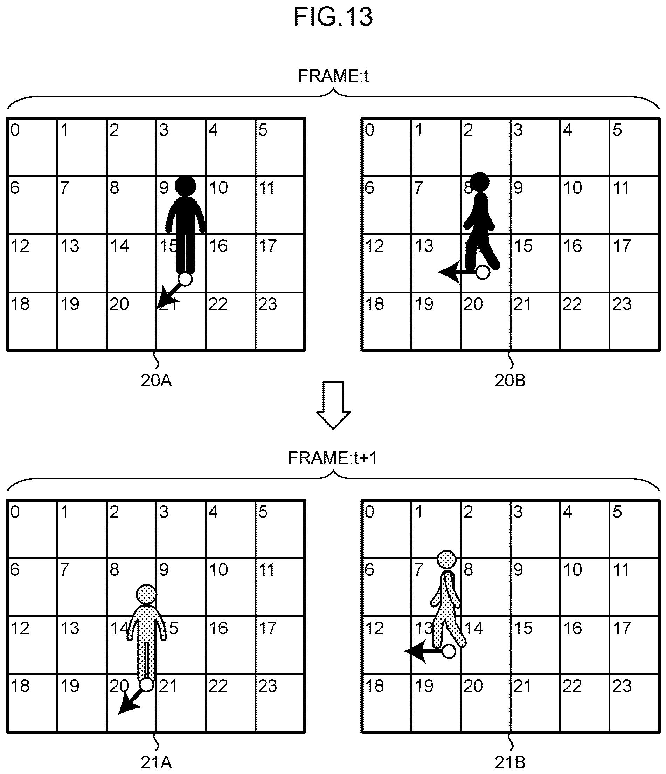

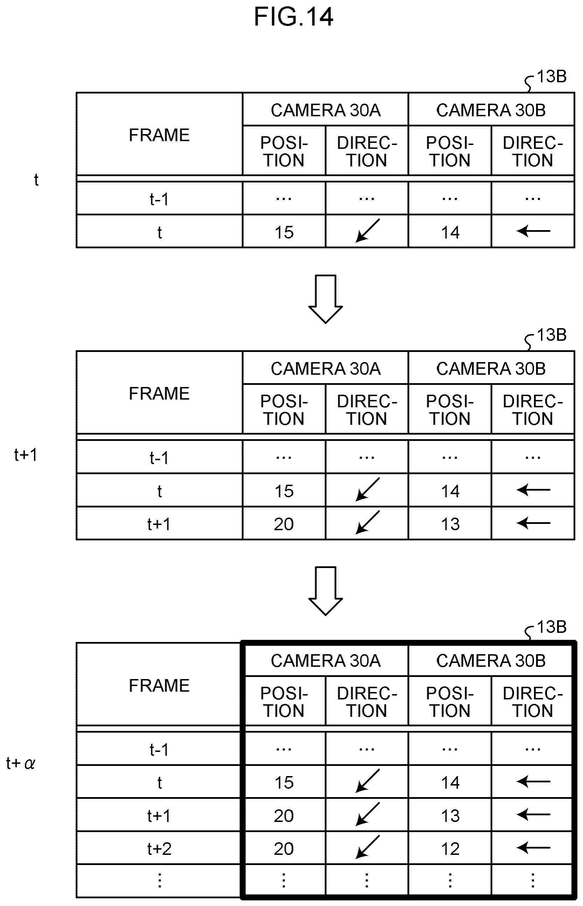

FIG. 13 is a diagram illustrating a detection example of a person. FIG. 14 is a diagram illustrating a generation example of a positional correspondence relationship between image elements. FIG. 13 illustrates, for each of the camera 30A and the camera 30B, a detection position of a person detected in each of a frame t and a frame t+1 under the camera arrangement and the person movement illustrated in FIG. 3. Further, in FIG. 13, as the detection position of the person, a middle point of the bottom of four sides included in the Bbox is plotted by a white circle. Further, in FIG. 13, as the direction of the person, a movement direction obtained from a difference between the detection position of the person in a previous frame and the detection position of the person in a current frame is plotted by an arrow.

As illustrated in FIG. 13, the image captured by the camera 30 is divided into a total of 24 blocks of 4 rows and 6 columns, as an example only. Such a block is used as an element of an image of the camera 30, and a positional correspondence relationship of the elements between the camera 30A and the camera 30B is recorded in units of frames.

For example, in the image 20A captured in the frame t by the camera 30A, the detection position of the person becomes a block with a block number "15", whereas in the image 20B captured in the frame t by the camera 30B, the detection position of the person becomes a block with a block number "14". In this case, as illustrated in FIG. 14, a correspondence relationship between the block number "15", which is an element of the image 20A of the camera 30A, and the block number "14", which is an element of the image 20B of the camera 30B, is recorded. Furthermore, as illustrated in FIG. 13, in the image 20A captured in the frame t by the camera 30A, a movement direction, that is, an arrow in the lower left direction, can be calculated from a difference between the detection position of the person in a frame t-1 and the detection position of the person in the frame t. Therefore, as illustrated in FIG. 14, the direction "arrow in the lower left direction" is recorded in association with the camera 30A of the data entry of the frame t. Furthermore, as illustrated in FIG. 13, in the image 20B captured in the frame t by the camera 30B, a movement direction, that is, an arrow in the left direction, can be calculated from a difference between the detection position of the person in the frame t-1 and the detection position of the person in the frame t. Therefore, as illustrated in FIG. 14, the direction "arrow in the left direction" is recorded in association with the camera 30B of the data entry of the frame t.

Furthermore, as illustrated in FIG. 13, in the image 21A captured in the frame t+1 by the camera 30A, the detection position of the person becomes a block with a block number "21", whereas in the image 21B captured in the frame t+1 by the camera 30B, the detection position of the person becomes a block with a block number "13". In this case, as illustrated in FIG. 14, a correspondence relationship between the block number "21", which is an element of the image 21A of the camera 30A, and the block number "13", which is an element of the image 21B of the camera 30B, is recorded. Furthermore, as illustrated in FIG. 13, in the image 21A captured in the frame t+1 by the camera 30A, a movement direction, that is, an arrow in the lower left direction, can be calculated from a difference between the detection position of the person in a frame t and the detection position of the person in the frame t+1. Therefore, as illustrated in FIG. 14, the direction "arrow in the lower left direction" is recorded in association with the camera 30A of the data entry of the frame t+1. Furthermore, as illustrated in FIG. 13, in the image 21B captured in the frame t+1 by the camera 30B, a movement direction, that is, an arrow in the left direction, can be calculated from a difference between the detection position of the person in the frame t and the detection position of the person in the frame t+1. Therefore, as illustrated in FIG. 14, the direction "arrow in the left direction" is recorded in association with the camera 30B of the data entry of the frame t+1.

As described above, in the example illustrated in FIG. 13, the detection positions of the person in the frame t and the frame t+1 have been exemplified as an example only, but it is obvious that the positional correspondence relationship of more elements can be accumulated by overlapping the further lapse of time after the frame t+2.

For example, as illustrated in FIG. 14, by registering the direction of the person in each camera 30 in the correspondence relationship data 13B for each frame, in a case where there are a plurality of persons in the same block, when the directions of the persons are different, it is possible to distinguish the persons according to the directions. That is, the persons can be distinguished from each other by collating the directions between frames. In this way, when the second re-identification unit 15G uses the direction of the person, the update of the correspondence relationship data 13B can be continued even after the completion of the correspondence relationship data 13B.

<Speed of Person>

As described above, the example in which the direction of the person in each camera 30 is registered in the correspondence relationship data 13B for each frame has been described, but other data can be further registered therein. For example, in the correspondence relationship data 13B, the speed of the person or the speed ratio, for example, the movement speed can be further registered for each camera 30. Such a movement speed can be calculated by converting a movement distance obtained from the detection position of a person in a previous frame and the detection position of a person in a current frame into a unit time. In this case, when there are a plurality of persons in the same block, it is possible to distinguish the persons by a difference in speed. That is, the persons can be distinguished from each other by collating the speeds between the frames. Even when the second re-identification unit 15G uses the speed of the person as described above, the update of the correspondence relationship data 13B can be continued even after the completion of the correspondence relationship data 13B.

<Interpolation Between Blocks>

For example, when a combination of the block numbers of the respective cameras 30 is registered in the correspondence relationship data 13B in time series, in a case where the array of the block numbers corresponding to the detection positions of persons detected in time series for each camera 30 is an array that moves in any one of eight directions of upward and downward directions, left and right directions, an upper left direction, a lower left direction, an upper right direction, and a lower right direction by skipping a specific number, for example, one block, the correspondence relationship generation unit 15F additionally registers the combination of the block numbers sandwiched by the array of the block numbers in the correspondence relationship data 13B.

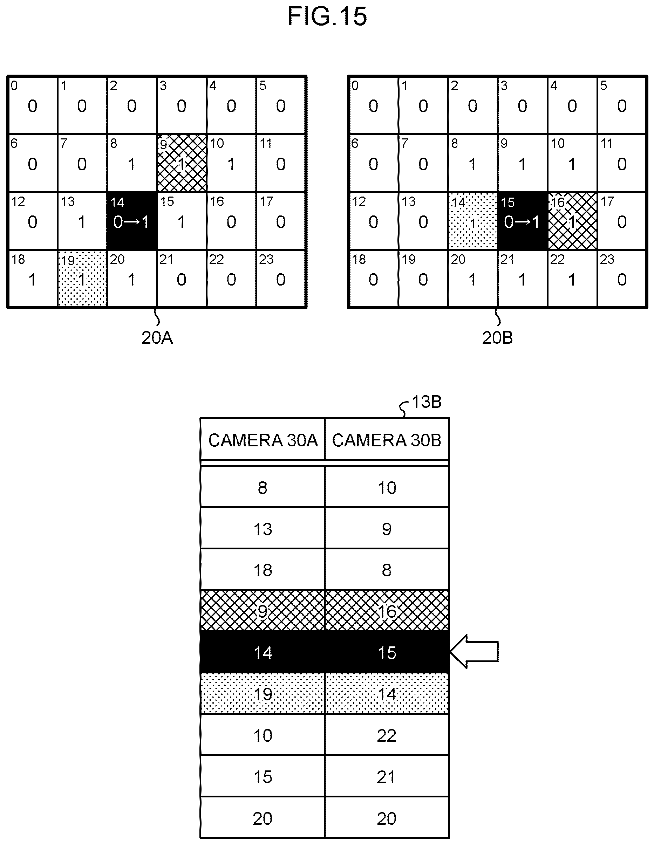

FIG. 15 is a diagram illustrating interpolation between blocks. FIG. 15 illustrates an example in which the image 20A and the image 20B respectively captured by the camera 30A and the camera 30B are divided into a total of 24 blocks of 4 rows and 6 columns. Furthermore, in FIG. 15, the presence or absence of person detection is indicated by a binary value of "0" or "1" for each block of the image 20A and the image 20B. As illustrated in FIG. 15, a case in which the array of block numbers corresponding to the detection positions of persons detected in time series by the camera 30A is a block number "9" and a block number "19", and the array of block numbers corresponding to the detection positions of persons detected in time series by the camera 30B is a block number "16" and a block number "14" will be described as an example. In this case, the array of the block numbers of the camera 30A becomes an array in which one block number is skipped in the lower left direction. Furthermore, the array of the block numbers of the camera 30B is an array in which one block number is skipped in the right direction. In this case, a combination of block numbers sandwiched between the arrays of the block numbers of the camera 30A and the camera 30B, that is, a combination of the block number "14" and the block number "15" is additionally registered in the correspondence relationship data 13B.

<Frequency>

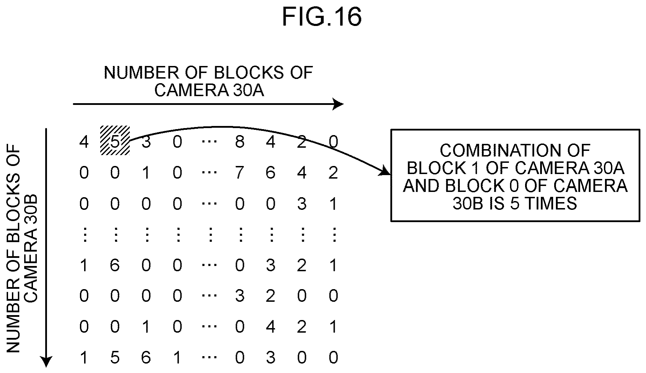

In above-described first embodiment, a description has been given as to an example in which the presence or absence of a positional correspondence relationship is registered in the correspondence relationship data 13B. However, in a case where a combination of the same block numbers is detected at the time of generating the correspondence relationship data 13B, the frequency of the positional correspondence relationship may be maintained by updating the number of times of the positional correspondence relationship. FIG. 16 is a diagram illustrating a configuration example of the correspondence relationship data. A column in correspondence relationship data 13B2 in the matrix format illustrated in FIG. 16 indicates the block number of the camera 30A, and a row in the correspondence relationship data 13B2 indicates the block number of the camera 30B. The frequency of the correspondence relationship is stored in each element of the correspondence relationship data 13B2 in the matrix format. For example, an element in the first row and the second column of the correspondence relationship data 13B2 in the matrix format means that the frequency of a combination of the block number "1" of the camera 30A and the block number "0" of the camera 30B is "5". This frequency may be an actual measurement value or a normalized value of the number of times of detection of a combination of block numbers. For example, the maximum value of the number of detections is determined, and the frequency can be normalized according to the following Equation (1). Since the frequency of the positional correspondence relationship is stored in the correspondence relationship data 13B in this manner, in a case where a first person re-identification result and a second person re-identification result do not match each other, it is possible to execute correction to match the first person re-identification result with the second person re-identification result only in a case where the frequency of the combination of the block numbers exceeds a threshold value.

Frequency = detection number/maximum value of detection number

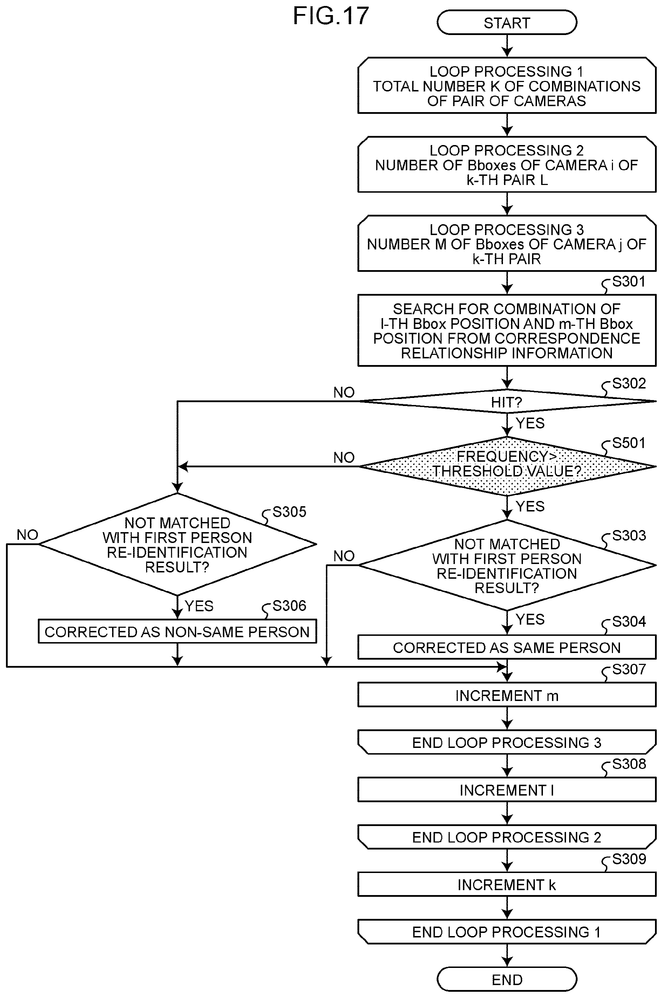

**[0131]** FIG. 17 is a flowchart illustrating a procedure of the second person re-identification processing. In FIG. 17, different step numbers are allocated to steps in which different procedures are executed as compared with the flowchart illustrated in FIG. 12.

As illustrated in FIG. 17, the processing executed in the Yes branch of step S302 is different from the flowchart illustrated in FIG. 12. That is, when the combination of the block number kil and the block number kjm is hit (Yes in step S302), the second re-identification unit 15G determines whether the frequency of the combination of the block number kil and the block number kjm exceeds a threshold value (step S501).

Here, when the frequency of the combination of the block number kil and the block number kjm exceeds the threshold value (Yes in step S501), the processing proceeds to step S303. On the other hand, when the frequency of the combination of the block number kil and the block number kjm does not exceed the threshold value (No in step S501), the processing proceeds to step S305.

Since the processing in step S501 is added as described above, correction can be performed only in a case where the correction is performed with high frequency at the time of correction from the first person re-identification result to the second person re-identification result. As a result, the accuracy of the Re-ID can be increased.

<Distribution and Integration>

Each of the components of the devices illustrated in the drawings does not need to be physically configured as illustrated in the drawings. That is, a specific form of distribution and integration of the devices is not limited to the illustrated form, and all or a part of the devices can be functionally or physically distributed and integrated in any units according to various loads, usage conditions, and the like. For example, the acquisition unit 15A, the person detection unit 15B, the feature extraction unit 15C, the tracking unit 15D, the first re-identification unit 15E, the correspondence relationship generation unit 15F, or the second re-identification unit 15G may be connected to the information processing apparatus via a network as an external device of the information processing apparatus 10. In addition, another device may include the acquisition unit 15A, the person detection unit 15B, the feature extraction unit 15C, the tracking unit 15D, the first re-identification unit 15E, the correspondence relationship generation unit 15F, or the second re-identification unit 15G, and may be connected to a network and may cooperate to implement the function of the information processing apparatus 10.

<Application Example>

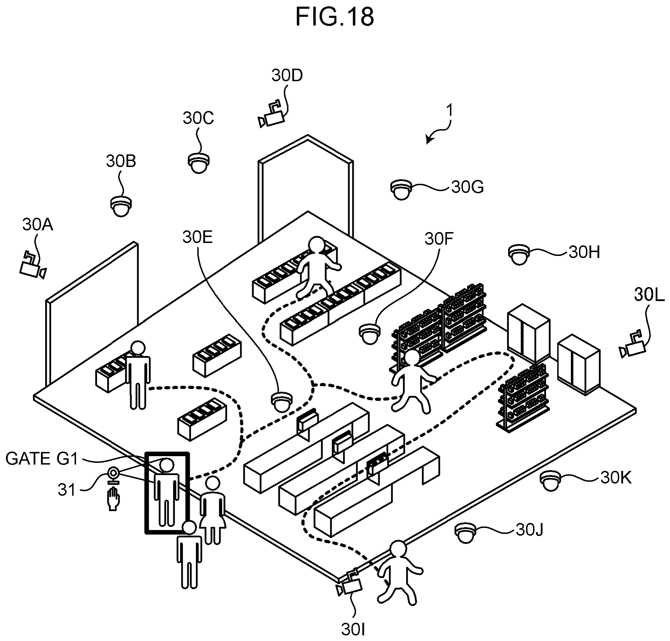

Next, an application example will be described with reference to FIG. 18. The information processing apparatus 10 can analyze a behavior of a checked in person using the images captured by the cameras 30A to 30N. A facility 1 is a railway facility, an airport, a store, or the like. In addition, a gate G1 arranged in the facility 1 is disposed at an entrance of a store, a ticket gate of a railway facility or an airport, or the like.

First, an example in which a check-in target is a railway facility or an airport will be described. In the case of a railway facility or an airport, the gate G1 is disposed at a ticket gate of the railway facility, or a counter or an inspection station of the airport. At this time, when biometric information on a person is pre-registered as a target of a passenger of a train or an airplane, the information processing apparatus 10 determines that authentication based on the biometric information on the person is successful.

Next, an example in which a check-in target is a store will be described. In the case of a store, the gate G1 is disposed at the entrance of the store. At this time, as check-in, when biometric information on a person is registered as a target of a member of the store, the information processing apparatus 10 determines that authentication based on the biometric information on the person is successful.

Here, details of the check-in will be described. A vein image or the like acquired by a biometric sensor 31, for example, a vein sensor, is acquired from the biometric sensor 31, and authentication is performed. Accordingly, an ID, a name, and the like of a person who checks in are specified.

At that time, the information processing apparatus 10 acquires an image of the person who checks in using the cameras 30A to 30N. Next, the information processing apparatus 10 detects the person from the image. The tracking unit 15D of the information processing apparatus 10 tracks the person detected from the images captured by the cameras 30 between frames. The information processing apparatus 10 associates the ID and the name of the person who checks in with the person to be tracked.

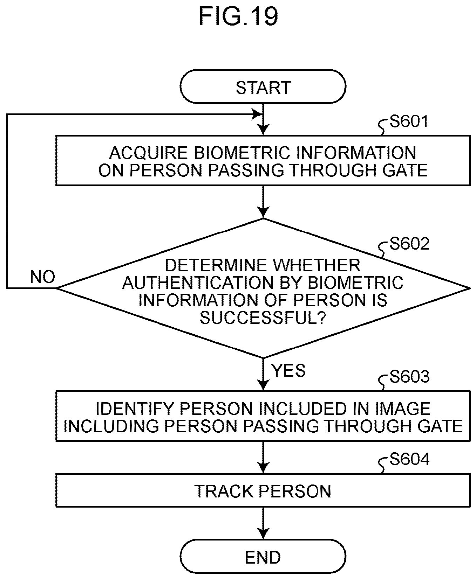

Here, with reference to FIG. 19, an application example will be described with a facility as a store. During checking in, the information processing apparatus 10 acquires biometric information on a person who passes through the gate G1 disposed at a predetermined position in the store (step S601). Specifically, the information processing apparatus 10 acquires, from the biometric sensor 31, a vein image or the like acquired by the biometric sensor 31 mounted on the gate G1 disposed at the entrance in the store, for example, a vein sensor, and performs authentication. At this time, the information processing apparatus 10 specifies an ID, a name, and the like of the user from the biometric information.

It is noted that the biometric sensor 31 is mounted on the gate G1 disposed at a predetermined position of the facility, and detects biometric information on a person passing through the gate G1. Further, the cameras 30A to 30N are installed on the ceiling of the store.

Furthermore, instead of the biometric sensor 31, the information processing apparatus 10 may acquire biometric information based on a face image captured by a camera mounted on the gate G1 disposed at the entrance in the store, and may perform authentication.

Next, the information processing apparatus 10 determines whether the authentication based on the biometric information on the person has been successful (step S602). When the authentication has been successful (Yes in step S602), the processing proceeds to step S603. On the other hand, when the authentication has failed (No in step S602), the processing proceeds to step S601.

Then, the information processing apparatus 10 analyzes an image including the person passing through the gate G1 to identify the person included in the image as the person who has checked into the facility 1 (step S603). The information processing apparatus 10 stores identification information on the person specified from the biometric information and the identified person in a storage unit in association with each other. Specifically, the information processing apparatus 10 stores the ID and the name of the person who checks in and the identified person in association with each other.

Thereafter, the information processing apparatus 10 analyzes videos acquired by the cameras 30A to 30N, and tracks the identified person using the results of identifying a first person and a second person (step S604). That is, the information processing apparatus 10 identifies the identity of the persons captured by the plurality of cameras 30A to 30N. Then, the information processing apparatus 10 specifies a route along which the identified person has been tracked, thereby specifying a trajectory of the identified person in the facility 1.

As a result, after the person checks in, it is possible to analyze a behavior of the person, related to purchase, by specifying whether the person who has checked in has acquired the product disposed in the store. Here, the behavior of the person, related to purchase, will be described. The information processing apparatus 10 generates skeleton information on the person by analyzing an image including the tracked person. Then, the information processing apparatus 10 identifies, by using the generated skeleton information, a behavior through which the tracked person has acquired the product. That **is,** the information processing apparatus 10 determines, after the person checks into the store, whether any product has been acquired from among a plurality of products arranged in the store from when the person enters the store until when the person exits the store. Then, the information processing apparatus 10 stores, in association with each other, the result of whether the product has been acquired and the ID and the name of the person who checks in.

Specifically, the information processing apparatus 10 specifies the customer staying in the store and the product arranged in the store from the images captured by the cameras 30A to 30N using the existing object detection technique. In addition, the information processing apparatus 10 generates skeleton information on the specified person from the images captured by the cameras 30A to 30N using the existing skeleton detection technique, and estimates the position and posture of each joint of the person. Then, the information processing apparatus 10 detects an operation of grasping a product, an operation of putting a product into a basket or a cart, and the like based on a positional relationship between the skeleton information and the product. For example, the information processing apparatus 10 determines that the product is grasped by the person when a region of the product overlaps the skeleton information located at the position of the arm of the person.

It is noted that the existing object detection algorithm is, for example, an object detection algorithm using deep training such as Faster R-convolutional neural network (CNN). Furthermore, the object detection algorithm may be an object detection algorithm such as you only look once (YOLO) or a single shot multibox detector (SSD). In addition, the existing skeleton estimation algorithm is, for example, a skeleton estimation algorithm using deep training such as HumanPoseEstimation such as DeepPose and OpenPose.

It is noted that, here, the vein image is taken as an example of the biometric information, but the biometric information may be a face image, a fingerprint image, an iris image, or the like. Furthermore, in the first embodiment, a description has been given as to an example in which the feature amount in which the image captured by the camera 30 is embedded in the feature space by the feature extraction unit 15C is used for the first person re-identification by the first re-identification unit 15E, but the present invention is not limited thereto. For example, biometric information detected by the cameras 30A to 30N or a feature amount extracted from the biometric information can also be used for the first person re-identification.

<Hardware Configuration>

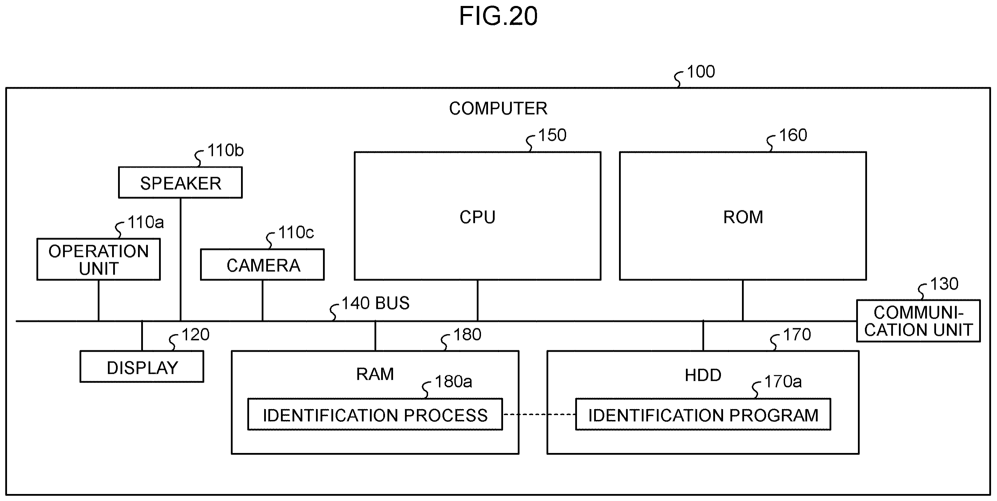

Further, various processing described in the embodiments can be implemented by executing a program prepared in advance using a computer such as a personal computer or a workstation. Therefore, an example of a computer that executes an identification program having the same functions as those of the first embodiment and the second embodiment will be described below with reference to FIG. 20.

FIG. 20 is a diagram illustrating a hardware configuration example. As illustrated in FIG. 20, a computer 100 includes an operation unit 110a, a speaker 110b, a camera 110c, a display 120, and a communication unit 130. The computer 100 further includes a CPU 150, a ROM 160, an HDD 170, and a RAM 180. The respective units 110 to 180 are connected to each other via a bus 140.

As illustrated in FIG. 20, the HDD 170 stores an identification program 170a that exhibits functions similar to those of the acquisition unit 15A, the person detection unit 15B, the feature extraction unit 15C, the tracking unit 15D, the first re-identification unit 15E, the correspondence relationship generation unit 15F, and the second re-identification unit 15G illustrated in FIG. 1. The identification program 170a may be integrated or separated, similarly to the respective components of the acquisition unit 15A, the person detection unit 15B, the feature extraction unit 15C, the tracking unit 15D, the first re-identification unit 15E, the correspondence relationship generation unit 15F, and the second re-identification unit 15G illustrated in FIG. 1. That is, not all of the data described in the first embodiment is stored in the HDD 170, and only data used for processing may be stored in the HDD 170.

Under such an environment, the CPU 150 reads the identification program 170a from the HDD 170 and then loads the identification program into the RAM 180. As a result, the identification program 170a functions as an identification process 180a, as illustrated in FIG. 20. The identification process 180a loads various types of data read from the HDD 170 into an area allocated to the identification process 180a in a storage area of the RAM 180, and executes various types of processing using the loaded various types of data. For example, as an example of the processing executed by the identification process 180a, the processing and the like illustrated in FIGS. 11, 12, and 17 are included. It is noted that, in the CPU 150, all the processing units described in the first embodiment do not need to operate, and it is sufficient that a processing unit corresponding to processing to be executed is virtually implemented.

It is noted that the identification program 170a does not have to be stored in the HDD 170 or the ROM 160 from the beginning. For example, each program is stored in a "portable physical medium" such as a flexible disk, a so-called FD, a CD-ROM, a DVD disk, a magneto-optical disk, or an IC card inserted into the computer 100. Then, the computer 100 may acquire and execute each program from the portable physical medium. Each program may be stored in another computer, a server device, or the like connected to the computer 100 via a public line, the Internet, a LAN, a WAN, or the like, and the computer 100 may acquire and execute each program from the computer or the server device.

Reference Signs List

| | |
|---|---|
| 10 | INFORMATION PROCESSING APPARATUS |
| 11 | COMMUNICATION CONTROL UNIT |
| 13 | STORAGE UNIT |
| 13A | ID INFORMATION |
| 13B | CORRESPONDENCE RELATIONSHIP DATA |
| 15 | CONTROL UNIT |
| 15A | ACQUISITION UNIT |
| 15B | PERSON DETECTION UNIT |
| 15C | FEATURE EXTRACTION UNIT |
| 15D | TRACKING UNIT |
| 15E | FIRST RE-IDENTIFICATION UNIT |
| 15F | CORRESPONDENCE RELATIONSHIP GENERATION UNIT |
| 15G | SECOND RE-IDENTIFICATION UNIT |
| 30A, 30B, ···, 30N | CAMERA |

**Claims**

1. An identification method of causing a computer to execute processing of:

    generating, when a first person is detected from a first image captured by a first camera and a second person is detected from a second image captured by a second camera, relationship information obtained by associating a position in the first image from which the first person is detected with a position in the second image from which the second person is detected; and
    identifying, based on feature information on the first person and feature information on the second person, the first person and the second person.

2. The identification method according to claim **1,** wherein the processing of generating the relationship information includes processing of generating the relationship information when the number of people detected from the first image and the number of people detected from the second image are less than a threshold value.

3. The identification method according to claim **1,** wherein the computer further executes processing of:

    identifying the first person and the second person based on whether a combination of the position in the first image from which the first person is detected and the position in the second image from which the second person is detected is registered in the relationship information; and
    correcting, when a first identification result identified by using the feature information and a second identification result identified by using the relationship information do not match each other, the first identification result to the second identification result.

4. The identification method according to claim **3,** wherein the processing of identifying the first and second persons using the feature information includes processing of identifying the first person and the second person when an elapsed time from start of generation of the relationship information is equal to or longer than a threshold value.

5. The identification method according to claim **3,** wherein the processing of identifying the first and second persons using the feature information includes processing of identifying the first person and the second person when the number of associations between the position in the first image and the position in the second image in the relationship information is equal to or greater than a threshold value.

6. The identification method according to claim **3,** wherein the processing of identifying the first and second persons using the feature information includes processing of identifying the first person and the second person when a coverage rate of the combination of the position in the first image and the position in the second image in the relationship information is equal to or greater than a threshold value.

7. The identification method according to claim **1,** wherein the processing of generating the relationship information includes processing of further associating a direction of the first person detected between frames of the first image with a direction of the second person detected between frames of the second image.

8. The identification method according to claim **1,** wherein the processing of generating the relationship information includes processing of further associating a speed of the first person detected between frames of the first image with a speed of the second person detected between frames of the second image.

9. The identification method according to claim **1,** wherein

    a sensor or a camera is mounted on a gate disposed at a predetermined position of a facility, and biometric information on a person is acquired based on detection of the biometric information on the person passing through the gate by the sensor or the camera,
    when authentication based on the acquired biometric information on the person is successful, a person included in an image is identified as a person who has checked into the facility by analyzing the image including the person passing through the gate,
    identification information on the person specified from the biometric information and the identified person are stored in association with each other, and
    the identified person is tracked using a result of identifying the first person and the second person.

**10.** The identification method according to claim 9, wherein

the facility is a store,
the gate is disposed at an entrance of the store,
when the acquired biometric information on the person is registered as a target of a member of the store, the authentication based on the biometric information on the person is determined to be successful, and
a behavior of the person, related to purchase, from when the person enters the store until when the person exits the store is specified by tracking the person moving in the store.

**11.** The identification method according to claim 10, wherein

skeleton information on the person is generated by analyzing an image including the tracked person, and
whether the tracked person has performed, as the behavior related to the purchase, a behavior of acquiring, in the store, a product arranged in the store is identified using the generated skeleton information.

**12.** The identification method according to claim 9, wherein

the facility is either a railway facility or an airport,
the gate is disposed at a ticket gate of the railway facility, or at a counter or an inspection station of the airport, and
when the acquired biometric information on the person is pre-registered as a target of a passenger on a train or an airplane, the authentication based on the biometric information on the person is determined to be successful.

**13.** An identification program configured to cause a computer to execute processing of:

generating, when a first person is detected from a first image captured by a first camera and a second person is detected from a second image captured by a second camera, relationship information obtained by associating a position in the first image from which the first person is detected with a position in the second image from which the second person is detected; and
identifying, based on feature information on the first person and feature information on the second person, the first person and the second person.

**14.** The identification program according to claim 13, wherein

a sensor or a camera is mounted on a gate disposed at a predetermined position of a facility, and biometric information on a person is acquired based on detection of the biometric information on the person passing through the gate by the sensor or the camera,
when authentication based on the acquired biometric information on the person is successful, a person included in an image is identified as a person who has checked into the facility by analyzing the image including the person passing through the gate,
identification information on the person specified from the biometric information and the identified person are stored in association with each other, and
the identified person is tracked using a result of identifying the first person and the second person.

**15.** The identification program according to claim 14, wherein

the facility is a store,
the gate is disposed at an entrance of the store,
when the acquired biometric information on the person is registered as a target of a member of the store, the authentication based on the biometric information on the person is determined to be successful, and
a behavior of the person, related to purchase, from when the person enters the store until when the person exits the store is specified by tracking the person moving in the store.

**16.** The identification program according to claim 15, wherein

skeleton information on the person is generated by analyzing an image including the tracked person, and
whether the tracked person has performed, as the behavior related to the purchase, a behavior of acquiring, in the store, a product arranged in the store is identified using the generated skeleton information.

**17.** The identification program according to claim 14, wherein

the facility is either a railway facility or an airport,
the gate is disposed at a ticket gate of the railway facility or the airport, and
when the acquired biometric information on the person is pre-registered as a target of a passenger on a train or an airplane, the authentication based on the biometric information on the person is determined to be successful.

**18.** An information processing apparatus comprising a control unit configured to execute processing of:

generating, when a first person is detected from a first image captured by a first camera and a second person is detected from a second image captured by a second camera, relationship information obtained by associating a position in the first image from which the first person is detected with a position in the second image from which the second person is detected; and
identifying, based on feature information on the first person and feature information on the second person, the first person and the second person.

FIG.1

INFORMATION PROCESSING APPARATUS 10

CAMERA 30A

CAMERA 30B

⋮ 30N

CAMERA

NW

COMMUNICATION CONTROL UNIT 11

CONTROL UNIT 15

ACQUISITION UNIT 15A

PERSON DETECTION UNIT 15B

FEATURE EXTRACTION UNIT 15C

TRACKING UNIT 15D

FIRST RE-IDENTI-FICATION UNIT 15E

CORRESPONDENCE RELATIONSHIP GENERATION UNIT 15F

SECOND RE-IDENTI-FICATION UNIT 15G

STORAGE UNIT 13

ID INFORMATION 13A

CORRESPONDENCE RELATIONSHIP DATA 13B

EP 4 723 032 A1

# FIG.2

30A

30B

10

INFORMATION PROCESSING APPARATUS

20A

ID:1

ID:2

21

22

20B

ID:2

ID:1

23

24

# FIG.3

# FIG.4

FRAME:t

20A

20B

FRAME:t+1

21A

21B

# FIG.5

t

| FRAME | POSITION | |
| --- | --- | --- |
| | CAMERA 30A | CAMERA 30B |
| t-1 | ... | ... |
| t | 15 | 14 |

t+1

| FRAME | POSITION | |
| --- | --- | --- |
| | CAMERA 30A | CAMERA 30B |
| t-1 | ... | ... |
| t | 15 | 14 |
| t+1 | 21 | 13 |

t+α

13B

| FRAME | POSITION | |
| --- | --- | --- |
| | CAMERA 30A | CAMERA 30B |
| t-1 | ... | ... |
| t | 15 | 14 |
| t+1 | 21 | 13 |
| t+2 | 21 | 12 |
| ⋮ | ⋮ | ⋮ |

FIG.6

# FIG.7

| CAMERA 30A | CAMERA 30B | CAMERA 30C |
|------------|------------|------------|
| 15 | 14 | 7 |

13B

| CAMERA 30A | CAMERA 30B | CAMERA 30C |
|------------|------------|------------|
| 15 | 14 | 7 |
| 7 | 11 | 20 |
| 18 | 6 | 8 |

EP 4 723 032 A1

# FIG.8

# FIG.9

| CAMERA 30A | CAMERA 30B | CAMERA 30C | |
|------------|------------|------------|---|
| 15 | 14 | 7 | → MATCHED WITH POSITIONAL RELATIONSHIP OF A |
| 7 | 11 | 20 | → MATCHED WITH POSITIONAL RELATIONSHIP OF B |
| 18 | 6 | 8 | |

# FIG.10

13B1

| CAMERA 30A | CAMERA 30B |
|:---:|:---:|
| 1 | 0 |
| 2 | 1 |
| ⋮ | ⋮ |
| 21 | 23 |
| ⋮ | ⋮ |

13B2

NUMBER OF BLOCKS OF
CAMERA 30A

NUMBER OF BLOCKS OF CAMERA 30B

```
0   1   0   1  ···  1   0   1   0
0   0   1   0  ···  1   0   1   1
0   0   0   0  ···  0   0   1   0
⋮   ⋮   ⋮   ⋮       ⋮   ⋮   ⋮   ⋮
1   1   0   1  ···  0   1   1   1
0   0   0   0  ···  0   1   0   1
0   0   1   0  ···  0   1   1   1
1   1   1   1  ···  0   1   0   0
```

# FIG.11

START

S101

ACQUIRE IMAGE OF EACH CAMERA

S102

DETECT PERSON FOR
EACH IMAGE OF EACH CAMERA

S103

EXTRACT FEATURE AMOUNT OF
EACH PERSON

S104

PERFORM TRACKING OF
ERSON FOR EACH IMAGE OF
EACH CAMERA

S105

PERFORM FIRST PERSON
RE-IDENTIFICATION

S106

IS
POSITIONAL
RELATIONSHIP
INCOMPLETE?

NO

S109

SECOND PERSON
RE-IDENTIFICATION
PROCESSING

YES

S107

IS NUMBER OF
PERSONS LESS THAN
THRESHOLD VALUE?

NO

YES

S108

STORE POSITIONAL RELATIONSHIP
OF PEOPLE IN EACH CAMERA

S110

OUTPUT ID OF EACH PERSON

END

# FIG.12

```
                              ( START )
                                 │
              ┌──────────────────────────────────────┐
              │  LOOP PROCESSING 1                    │
              │  TOTAL NUMBER K OF COMBINATIONS       │
              │  OF PAIR OF CAMERAS                   │
              └──────────────────────────────────────┘
                                 │
              ┌──────────────────────────────────────┐
              │  LOOP PROCESSING 2                    │
              │  NUMBER L OF Bboxes OF CAMERA i OF    │
              │  k-TH PAIR                            │
              └──────────────────────────────────────┘
                                 │
              ┌──────────────────────────────────────┐
              │  LOOP PROCESSING 3                    │
              │  NUMBER M OF Bboxes OF CAMERA j OF    │
              │  k-TH PAIR                            │
              └──────────────────────────────────────┘
                                 │              ⌐S301
              ┌──────────────────────────────────────┐
              │  SEARCH FOR COMBINATION OF            │
              │  l-TH Bbox POSITION AND m-TH Bbox     │
              │  POSITION FROM CORRESPONDENCE         │
              │  RELATIONSHIP INFORMATION             │
              └──────────────────────────────────────┘
```

- S301: SEARCH FOR COMBINATION OF l-TH Bbox POSITION AND m-TH Bbox POSITION FROM CORRESPONDENCE RELATIONSHIP INFORMATION
- S302: HIT? — NO / YES
- S305: NOT MATCHED WITH FIRST PERSON RE-IDENTIFICATION RESULT? — NO / YES
- S306: CORRECTED AS NON-SAME PERSON
- S303: NOT MATCHED WITH FIRST PERSON RE-IDENTIFICATION RESULT? — NO / YES
- S304: CORRECTED AS SAME PERSON
- S307: INCREMENT m
- END LOOP PROCESSING 3
- S308: INCREMENT l
- END LOOP PROCESSING 2
- S309: INCREMENT k
- END LOOP PROCESSING 1
- END

# FIG.13

FRAME:t

20A

20B

FRAME:t+1

21A

21B

# FIG.14

13B

| FRAME | CAMERA 30A | | CAMERA 30B | |
|---|---|---|---|---|
| | POSI-TION | DIREC-TION | POSI-TION | DIREC-TION |
| t-1 | ... | ... | ... | ... |
| t | 15 | ↙ | 14 | ← |

t

⬇

13B

| FRAME | CAMERA 30A | | CAMERA 30B | |
|---|---|---|---|---|
| | POSI-TION | DIREC-TION | POSI-TION | DIREC-TION |
| t-1 | ... | ... | ... | ... |
| t | 15 | ↙ | 14 | ← |
| t+1 | 20 | ↙ | 13 | ← |

t+1

⬇

13B

| FRAME | CAMERA 30A | | CAMERA 30B | |
|---|---|---|---|---|
| | POSI-TION | DIREC-TION | POSI-TION | DIREC-TION |
| t-1 | ... | ... | ... | ... |
| t | 15 | ↙ | 14 | ← |
| t+1 | 20 | ↙ | 13 | ← |
| t+2 | 20 | ↙ | 12 | ← |
| ⋮ | ⋮ | ⋮ | ⋮ | ⋮ |

t+α

# FIG.15

20A

20B

| CAMERA 30A | CAMERA 30B |
|---|---|
| 8 | 10 |
| 13 | 9 |
| 18 | 8 |
| 9 | 16 |
| 14 | 15 |
| 19 | 14 |
| 10 | 22 |
| 15 | 21 |
| 20 | 20 |

13B

# FIG.16

NUMBER OF BLOCKS OF
CAMERA 30A

NUMBER OF BLOCKS OF
CAMERA 30B

| 4 | 5 | 3 | 0 | ⋯ | 8 | 4 | 2 | 0 |
| 0 | 0 | 1 | 0 | ⋯ | 7 | 6 | 4 | 2 |
| 0 | 0 | 0 | 0 | ⋯ | 0 | 0 | 3 | 1 |
| ⋮ | ⋮ | ⋮ | ⋮ | ⋮ | ⋮ | ⋮ | ⋮ | ⋮ |
| 1 | 6 | 0 | 0 | ⋯ | 0 | 3 | 2 | 1 |
| 0 | 0 | 0 | 0 | ⋯ | 3 | 2 | 0 | 0 |
| 0 | 0 | 1 | 0 | ⋯ | 0 | 4 | 2 | 1 |
| 1 | 5 | 6 | 1 | ⋯ | 0 | 3 | 0 | 0 |

COMBINATION OF
BLOCK 1 OF CAMERA 30A
AND BLOCK 0 OF CAMERA
30B IS 5 TIMES

# FIG.17

```
                          ( START )
                             │
            ┌────────────────────────────────────────┐
            │  LOOP PROCESSING 1                      │
            │  TOTAL NUMBER K OF COMBINATIONS         │
            │  OF PAIR OF CAMERAS                     │
            └────────────────────────────────────────┘
                             │
            ┌────────────────────────────────────────┐
            │  LOOP PROCESSING 2                      │
            │  NUMBER OF Bboxes OF CAMERA i OF        │
            │  k-TH PAIR L                            │
            └────────────────────────────────────────┘
                             │
            ┌────────────────────────────────────────┐
            │  LOOP PROCESSING 3                      │
            │  NUMBER M OF Bboxes OF CAMERA j OF      │
            │  k-TH PAIR                              │
            └────────────────────────────────────────┘
                             │              ⌐S301
            ┌────────────────────────────────────────┐
            │  SEARCH FOR COMBINATION OF              │
            │  l-TH Bbox POSITION AND m-TH Bbox       │
            │  POSITION FROM CORRESPONDENCE           │
            │  RELATIONSHIP INFORMATION               │
            └────────────────────────────────────────┘
```

FIG.18

# FIG.19

START

ACQUIRE BIOMETRIC INFORMATION
ON PERSON PASSING THROUGH GATE ⌐S601

DETERMINE WHETHER
AUTHENTICATION BY BIOMETRIC
INFORMATION OF PERSON IS
SUCCESSFUL? ⌐S602

NO

YES ⌐S603

IDENTIFY PERSON INCLUDED IN IMAGE
INCLUDING PERSON PASSING THROUGH GATE

TRACK PERSON ⌐S604

END

# FIG.20

COMPUTER ~100

SPEAKER ~110b

OPERATION UNIT ~110a

CAMERA ~110c

CPU ~150

ROM ~160

COMMUNI-CATION UNIT ~130

DISPLAY ~120

140 BUS

RAM ~180

IDENTIFICATION PROCESS ~180a

HDD ~170

IDENTIFICATION PROGRAM ~170a

## INTERNATIONAL SEARCH REPORT

| International application No. |
|---|
| **PCT/JP2023/020563** |

| A. | CLASSIFICATION OF SUBJECT MATTER |
|---|---|

*G06T 7/00*(2017.01)i
FI:    G06T7/00 660B

According to International Patent Classification (IPC) or to both national classification and IPC

| B. | FIELDS SEARCHED |
|---|---|

Minimum documentation searched (classification system followed by classification symbols)

G06T7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2004-72628 A (UNIVERISTY OF WASEDA) 04 March 2004 (2004-03-04) paragraphs [0019], [0027], [0032] | 1-2, 13, 18 |
| Y | | 7-12, 14-17 |
| A | | 3-6 |
| Y | JP 2012-78950 A (SOGO KEIBI HOSHO CO., LTD.) 19 April 2012 (2012-04-19) paragraphs [0058], [0065] | 7-12, 14-17 |
| Y | WO 2022/195752 A1 (NEC CORPORATION) 22 September 2022 (2022-09-22) paragraphs [0010], [0016]-[0017], [0024], [0041] | 9-12, 14-17 |
| Y | WO 2019/181499 A1 (NEC CORPORATION) 26 September 2019 (2019-09-26) paragraphs [0002], [0019], [0033] | 9-12, 14-17 |
| A | JP 2017-182761 A (FUJI XEROX CO., LTD.) 05 October 2017 (2017-10-05) paragraphs [0038]-[0044] | 3-6 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 August 2023** | **15 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/020563**

| Patent document cited in search report | | | Publication date (day/month/year) | Patent family member(s) | Publication date (day/month/year) |
|---|---|---|---|---|---|
| JP | 2004-72628 | A | 04 March 2004 | (Family: none) | |
| JP | 2012-78950 | A | 19 April 2012 | (Family: none) | |
| WO | 2022/195752 | A1 | 22 September 2022 | (Family: none) | |
| WO | 2019/181499 | A1 | 26 September 2019 | US 2021/0027318 A1 paragraphs [0002], [0031], [0047]<br>CN 111868773 A<br>TW 201941141 A | |
| JP | 2017-182761 | A | 05 October 2017 | US 2017/0278255 A1 paragraphs [0036]-[0042] | |

Form PCT/ISA/210 (patent family annex) (January 2015)

**REFERENCES CITED IN THE DESCRIPTION**

**Patent documents cited in the description**

- WO 2011010490 A